# EUROPEAN PATENT SPECIFICATION

(11) **EP 4 167 141 B1**
(45) Date of publication and mention of the grant of the patent: **29.01.2025**
(21) Application number: 22201464.9
(22) Date of filing: 13.10.2022
(51) Int. Cl.: G06N 3/048, G06N 3/063

(54) **VECTOR ACTIVATION FUNCTION TO SUPPORT MACHINE LEARNING INFERENCE AND OTHER PROCESSES**
VEKTORAKTIVIERUNGSFUNKTION ZUR UNTERSTÜTZUNG VON MASCHINENLERNINFERENZEN UND ANDEREN PROZESSEN
FONCTION D'ACTIVATION DE VECTEUR POUR PRENDRE EN CHARGE UNE INFÉRENCE D'APPRENTISSAGE AUTOMATIQUE ET D'AUTRES PROCESSUS

(30) Priority: 13.10.2021 US 202117500598
(43) Date of publication of application: 19.04.2023
(73) Proprietor: Mellanox Technologies, Ltd., 2069200 Yokneam (IL)
(72) Inventor: PARDO, Ilan, 2069200 Yokneam (IL); FUHRER, Benjamin, 2069200 Yokneam (IL); KOREM, Noam, 2069200 Yokneam (IL); YEFET, Gal, 2069200 Yokneam (IL); BAR-ON, Tomer, 2069200 Yokneam (IL)
(74) Representative: Kramer, Dani

(56) References cited:
- US-A1- 2019 042 922
- DATABASE INSPEC [online] THE INSTITUTION OF ELECTRICAL ENGINEERS, STEVENAGE, GB; 25 April 2021 (2021-04-25), RAN WU ET AL: "Accelerating neural network inference on fpga-based platforms: a survey", Database accession no. 21211024
- ELECTRONICS MDPI SWITZERLAND, vol. 10, no. 9, 25 April 2021 (2021-04-25), ISSN: 2079-9292, DOI: 10.3390/ELECTRONICS10091025
- WU RAN ET AL: "Accelerating Neural Network Inference on FPGA-Based Platforms-A Survey", ELECTRONICS, vol. 10, no. 9, 25 April 2021 (2021-04-25), Basel, Switzerland, pages 1025, XP093147509, ISSN: 2079-9292, DOI: 10.3390/electronics10091025
- BOUGUEZZI SAFA ET AL: "Hardware Implementation of Fixed-Point Convolutional Neural Network For Classification", 2021 IEEE INTERNATIONAL CONFERENCE ON DESIGN & TEST OF INTEGRATED MICRO & NANO-SYSTEMS (DTS), IEEE, 7 June 2021 (2021-06-07), pages 1 - 6, XP033951072, DOI: 10.1109/DTS52014.2021.9498072

## Description

### TECHNICAL FIELD

The present disclosure is generally directed to a processor having one or more arithmetic logic units (ALUs) to support various processor functions.

### BACKGROUND

Typical machine learning inference and other processing functions involve computing an accumulation of products fed into a non-linear activation function. Some computer architectures support vector and/or matrix operations for numeric multiplication and addition as well as MAX and MIN. Some activation functions are simple and can be performed by some vector primitives. Other activation functions are less simple. Improvements to processor architectures that implement these types of functions (e.g., non-linear functions, activation functions, etc.) can improve the overall performance of the processor from a computational efficiency standpoint, a reduced processing time standpoint, and/or a reduced energy consumption standpoint.

Bouguezzi, S., Faiedh, H. and Souani, C. (2021) 'Hardware implementation of fixed-point convolutional neural network for classification', 2021 IEEE International Conference on Design & Test of Integrated Micro & Nano-Systems (DTS)*,* relates to convolutional neural network implementation deployment on Virtex-7 while varying the activation function such as ReLU, PReLU, and Tanh Exponentional activation functions.

US2019/0042922A1 relates to a deep neural network architecture using piecewise linear approximation.

### SUMMARY

The invention is defined by the independent claims. The dependent claims define preferred embodiments.

A processing unit according to claim 1 is provided.

The hardware approximation of the activation function may be performed in an absence of performing a memory lookup. The lookup table may be used for data aggregation during the hardware approximation of the activation function. The input vector may be part of a matrix. The activation function may be made available on a vector instruction list. The activation function may comprise a sigmoid function. The activation function may comprise a tanh(x) function. The activation function may comprise a non-linear function. The input vector may comprise N elements, wherein each of the N elements are processed during a single clock cycle.

A system according to claim 8 is provided.

The processing unit may comprise a Central Processing Unit. The processing unit may comprise a Graphics Processing Unit. The processing unit may comprise a Data Processing Unit.

The activation function may comprise a non-linear function. The activation function may comprise at least one of a sigmoid function and a tanh(x) function.

A device according to claim 13 is provided.

The activation function may comprise at least one of a sigmoid function and a tanh(x) function.

### BRIEF DESCRIPTION OF DRAWINGS

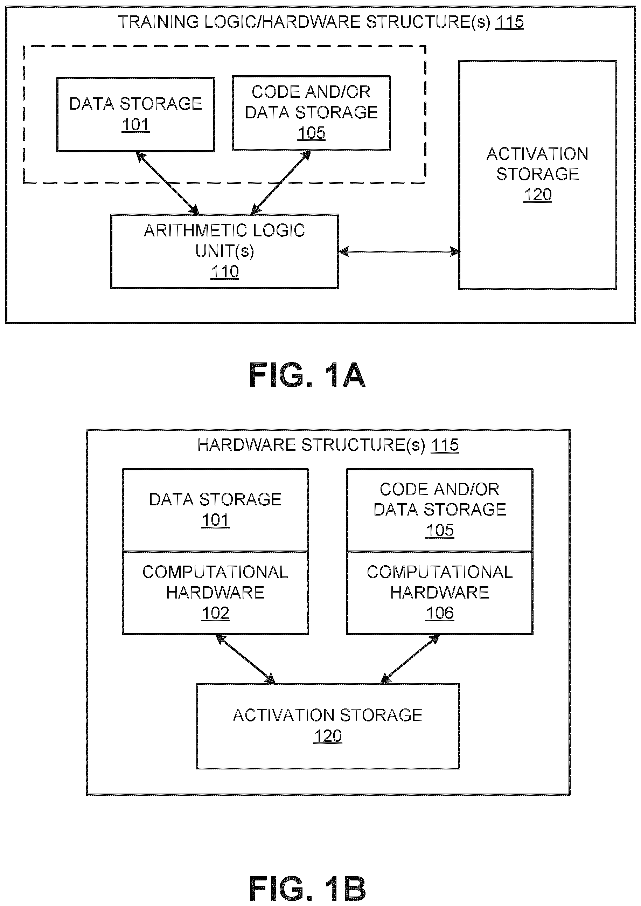

FIG. 1A illustrates inference and/or training logic.
FIG. 1B illustrates inference and/or logic.

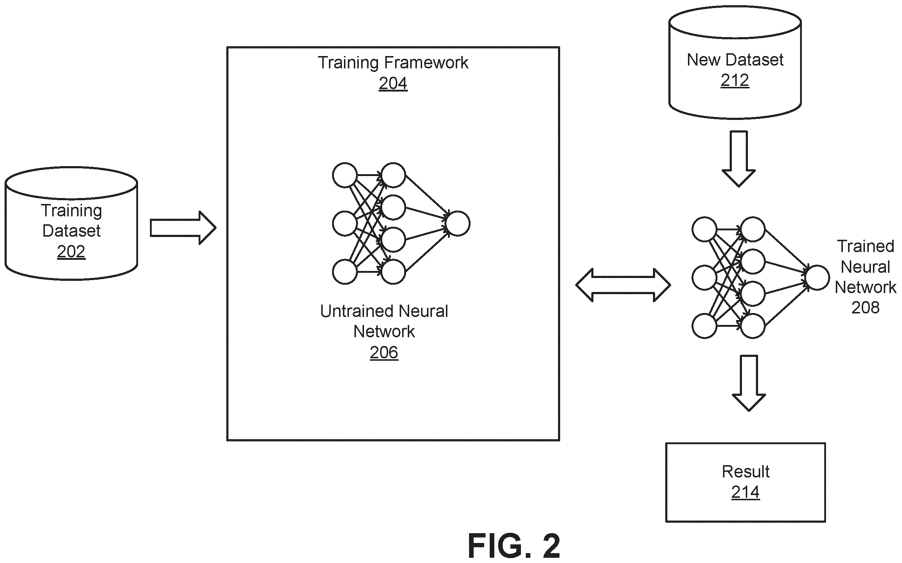

FIG. 2 illustrates training and deployment of a neural network.

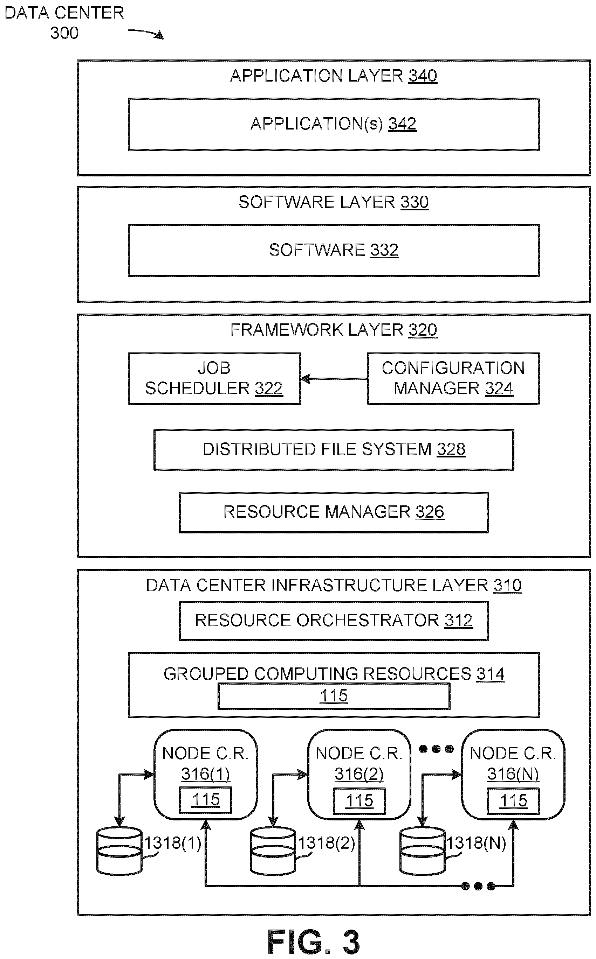

FIG. 3 illustrates an example data center system.

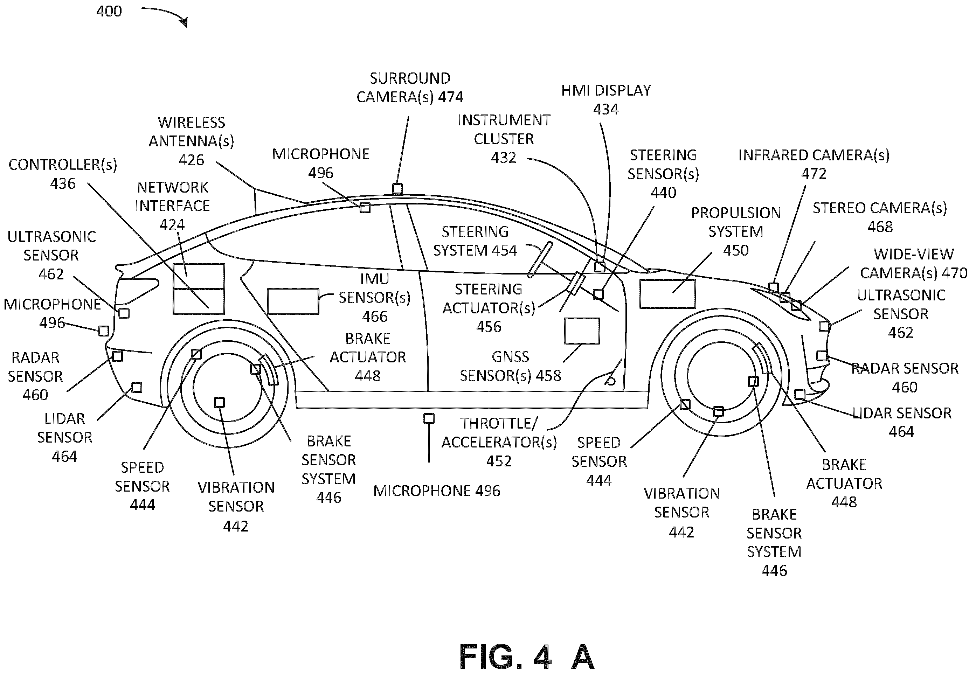

FIG. 4A illustrates an autonomous vehicle.

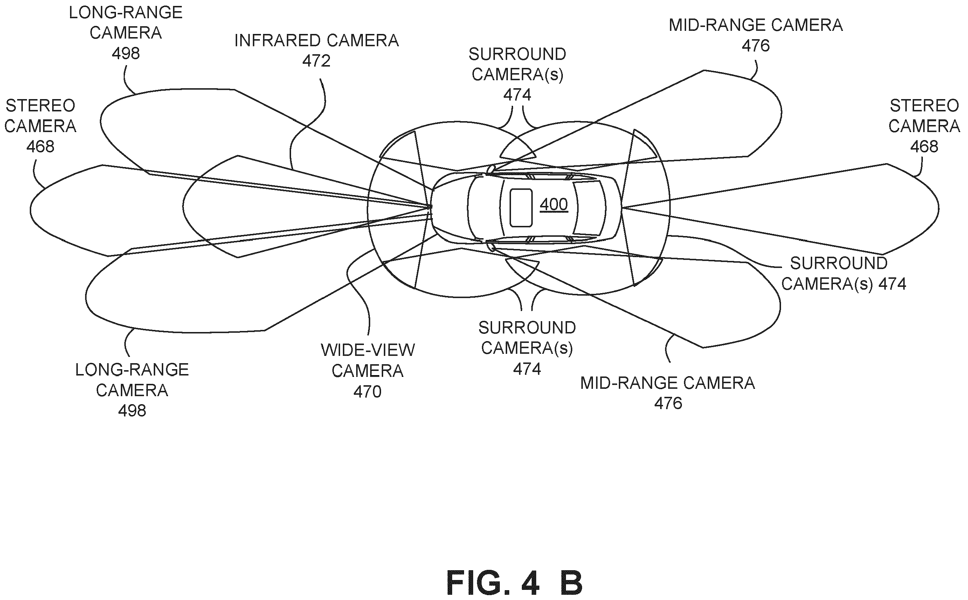

FIG. 4B illustrates an example of camera locations and fields of view for the autonomous vehicle of FIG. 4A.

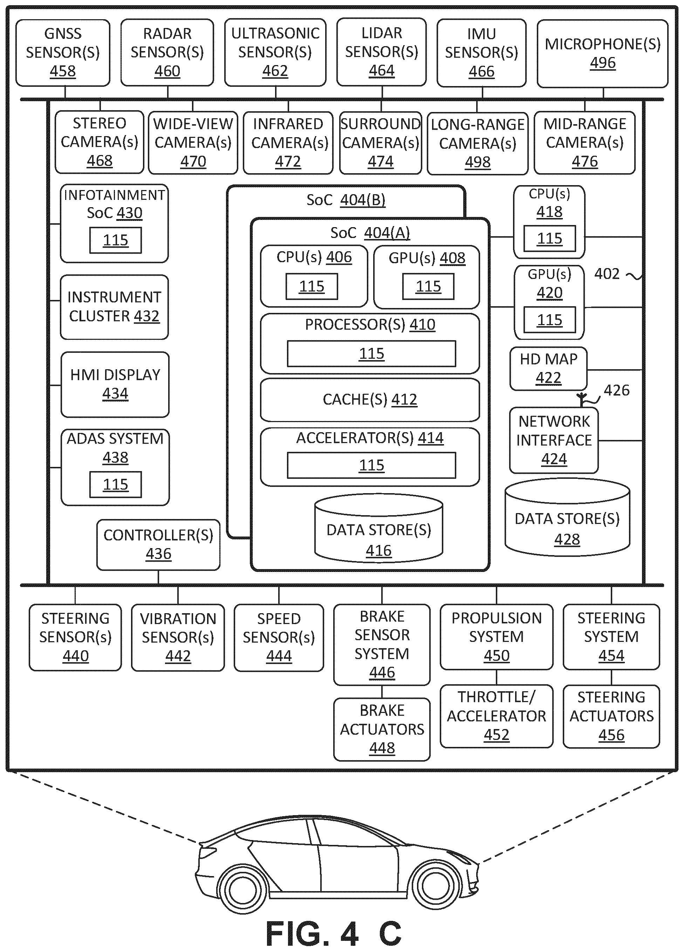

FIG. 4C is a block diagram illustrating an example system architecture for the autonomous vehicle of FIG. 4A.

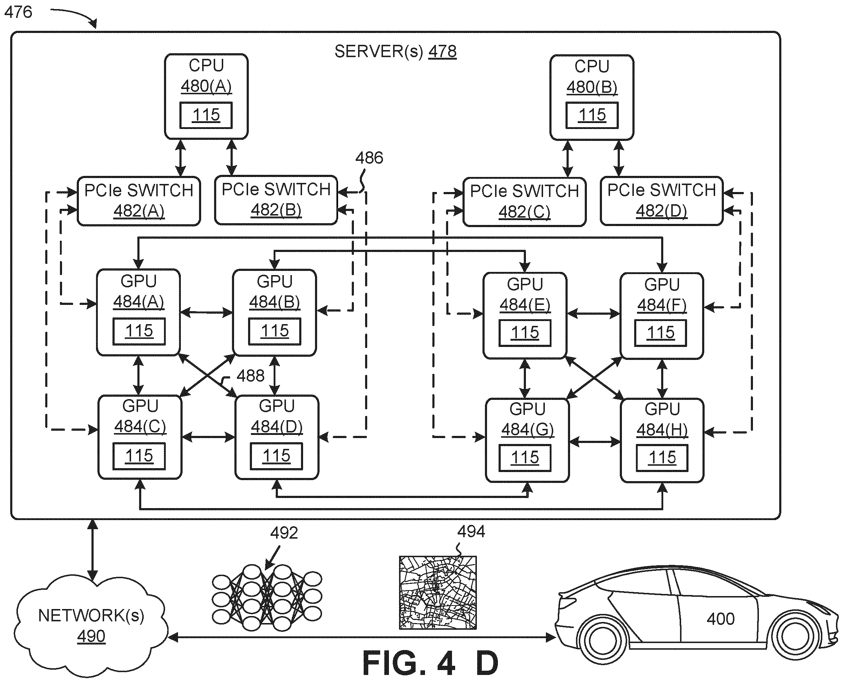

FIG. 4D is a diagram illustrating a system for communication between cloud-based server(s) and the autonomous vehicle of FIG. 4A.

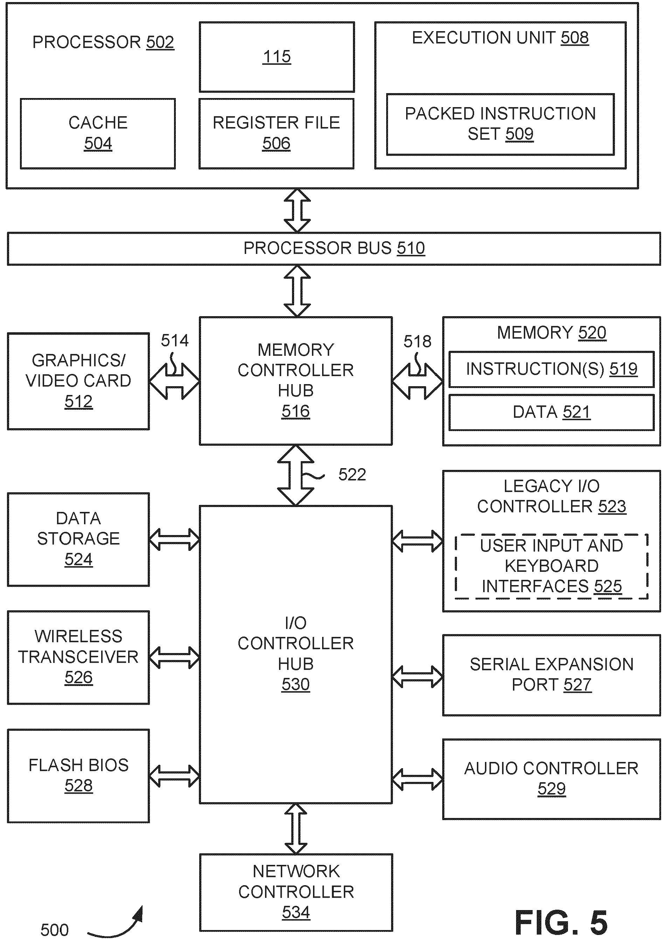

FIG. 5 is a block diagram illustrating a computer system.

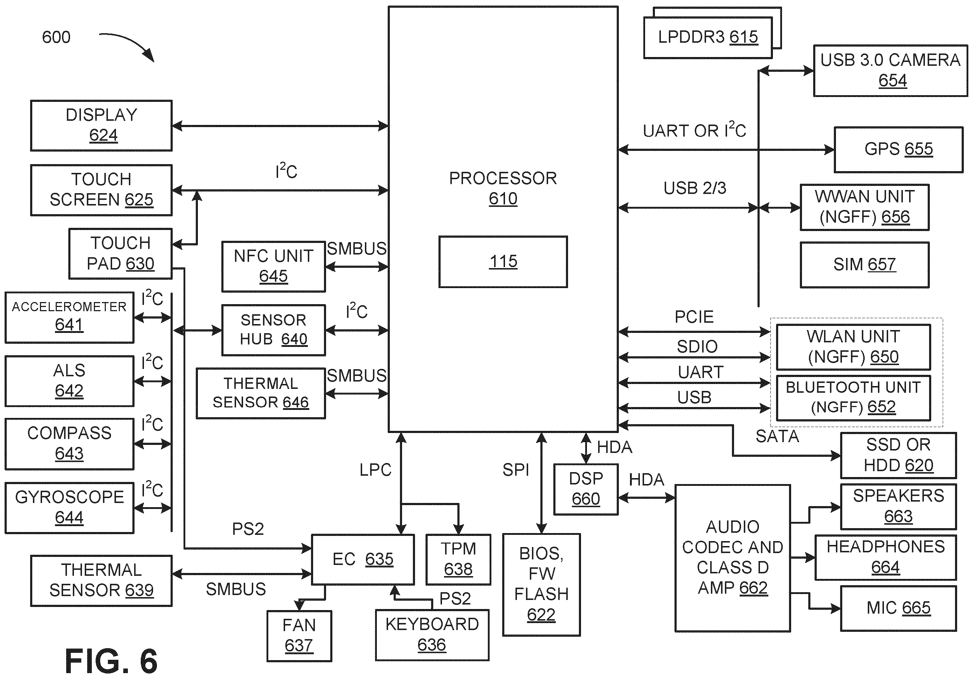

FIG. 6 is a block diagram illustrating a computer system.

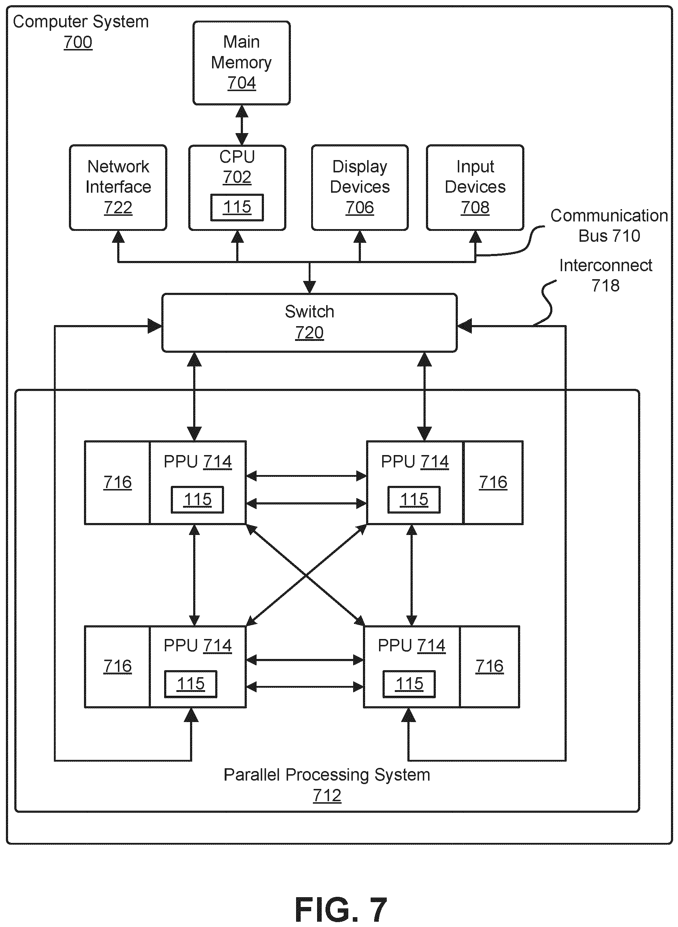

FIG. 7 illustrates a computer system.

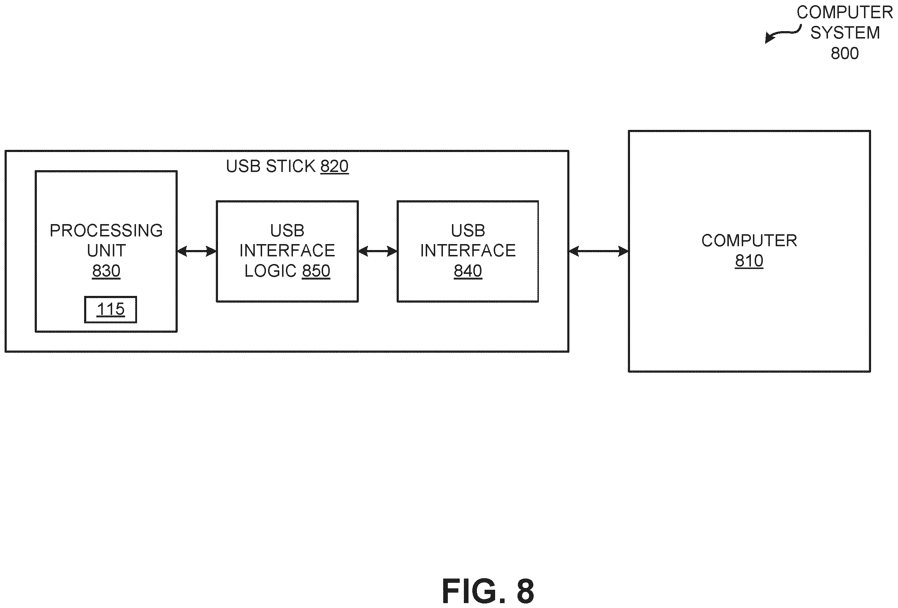

FIG. 8 illustrates a computer system.

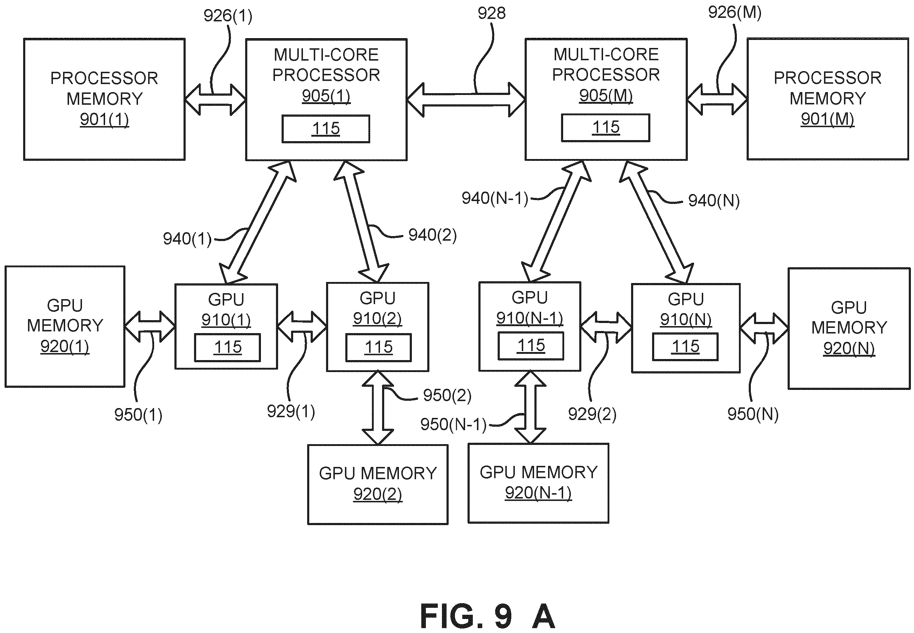

FIG. 9A illustrates a computer system.

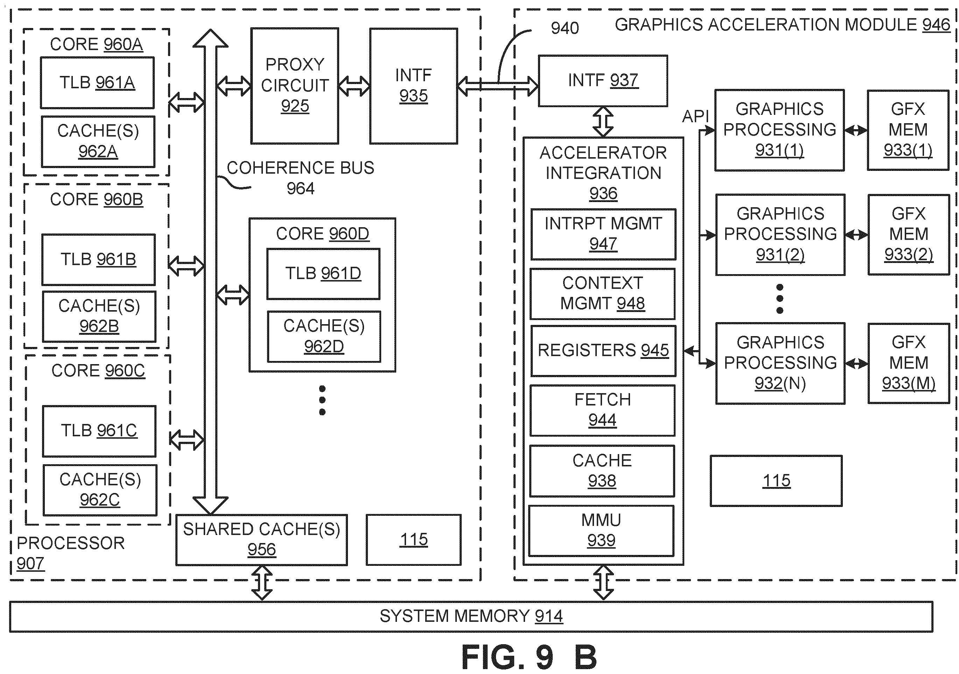

FIG. 9B illustrates a computer system.

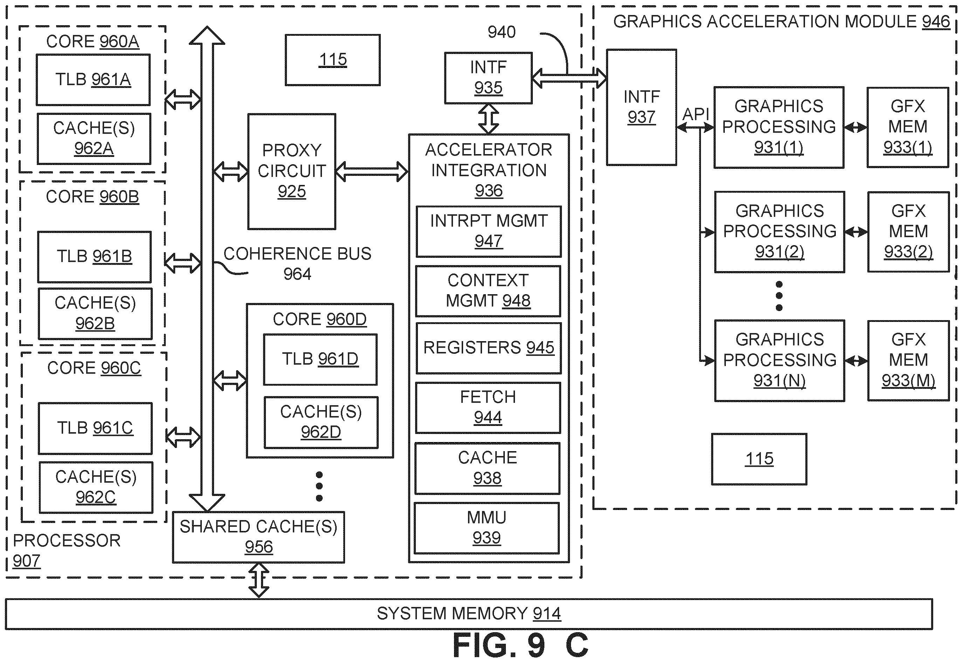

FIG. 9C illustrates a computer system.

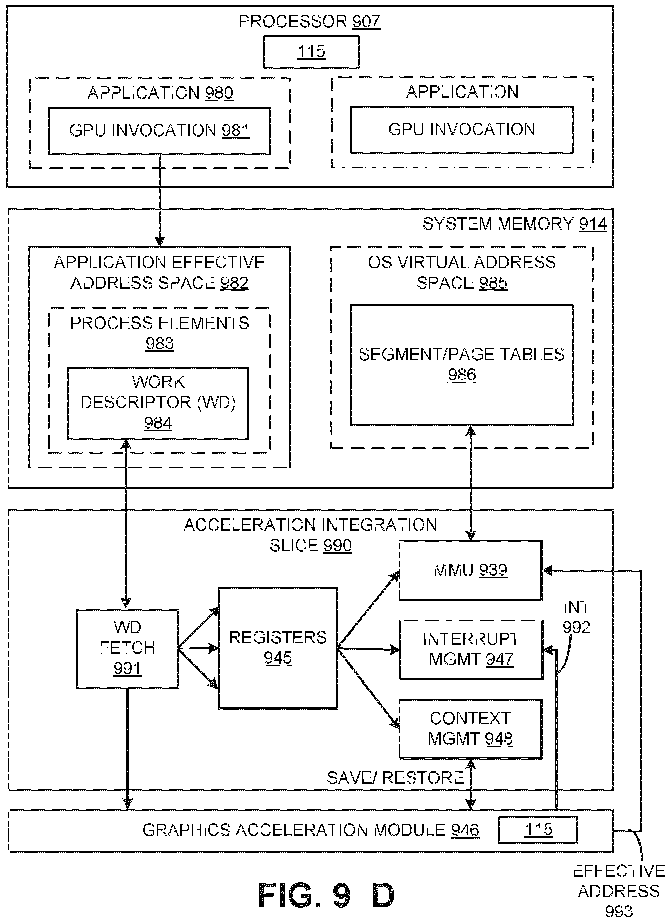

FIG. 9D illustrates a computer system.

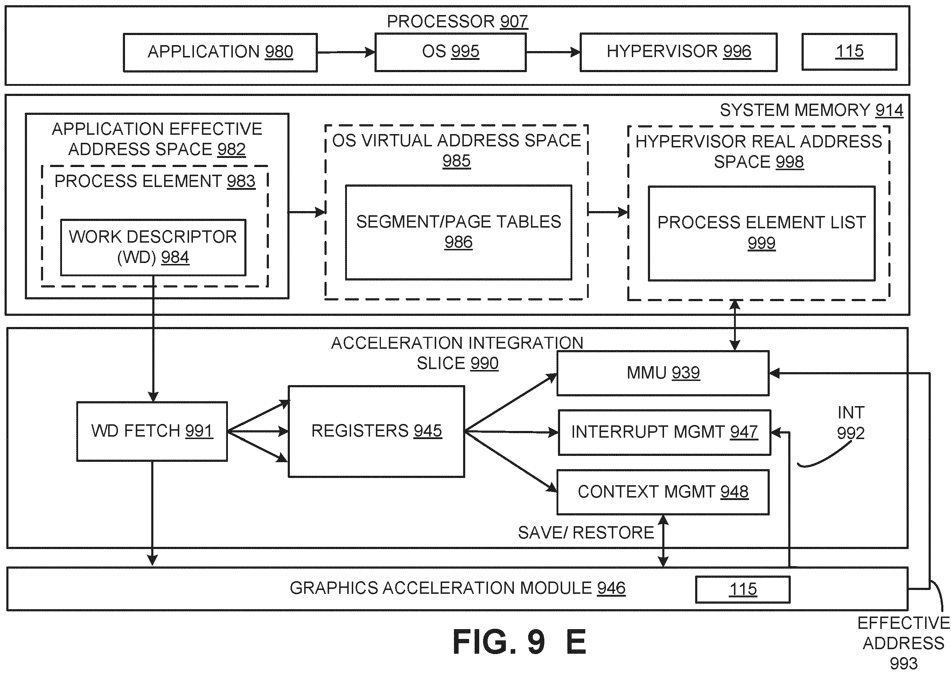

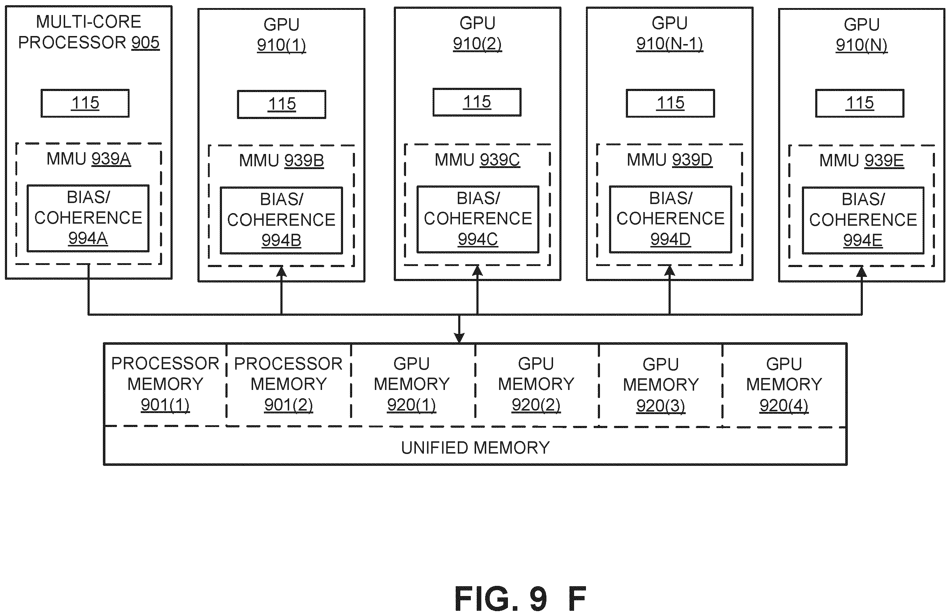

FIG. 9E and 9F illustrate a shared model.

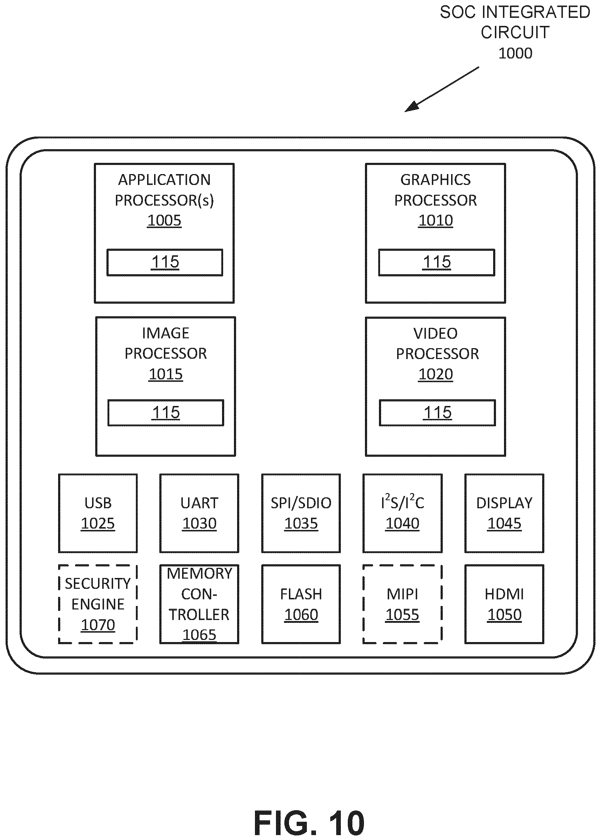

FIG. 10 illustrates exemplary integrated circuits and associated graphics processors.

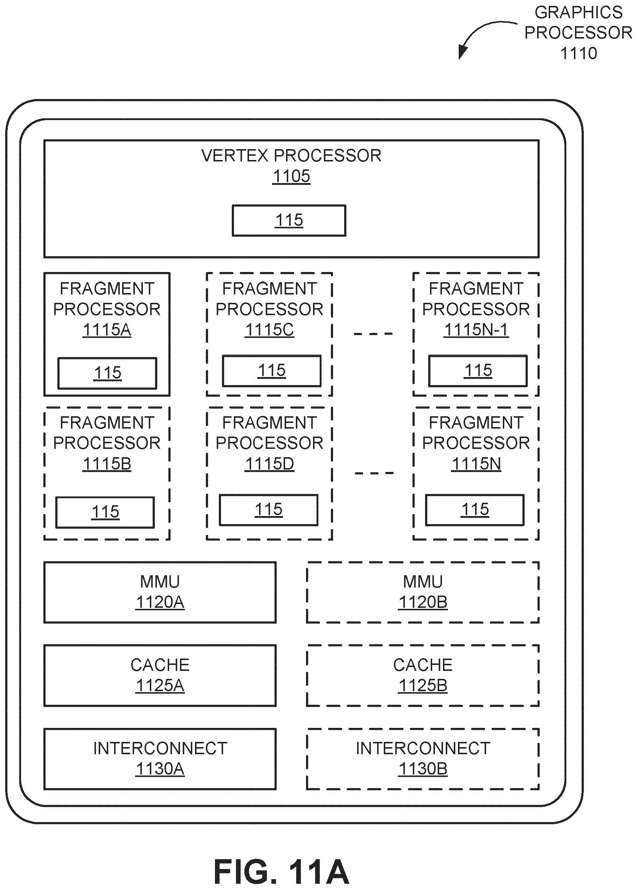

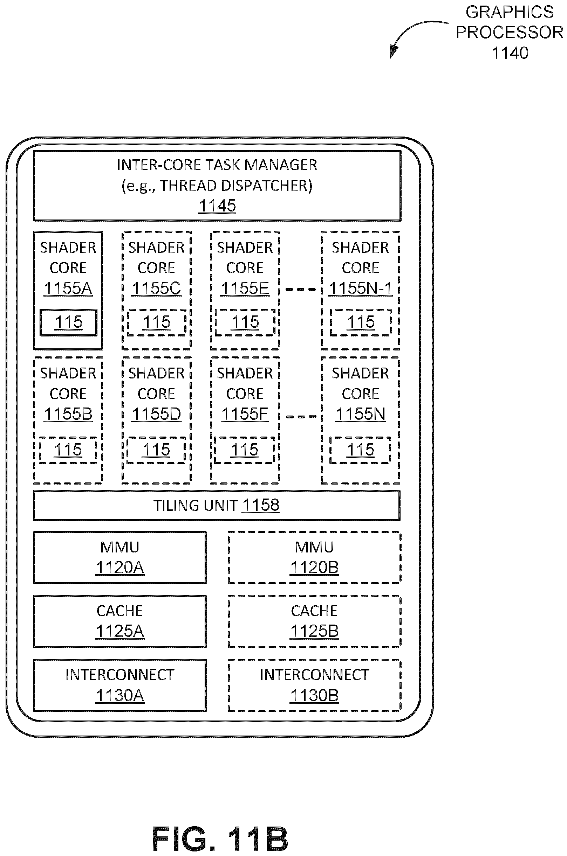

FIGS. 11A-11B illustrate exemplary integrated circuits and associated graphics processors.

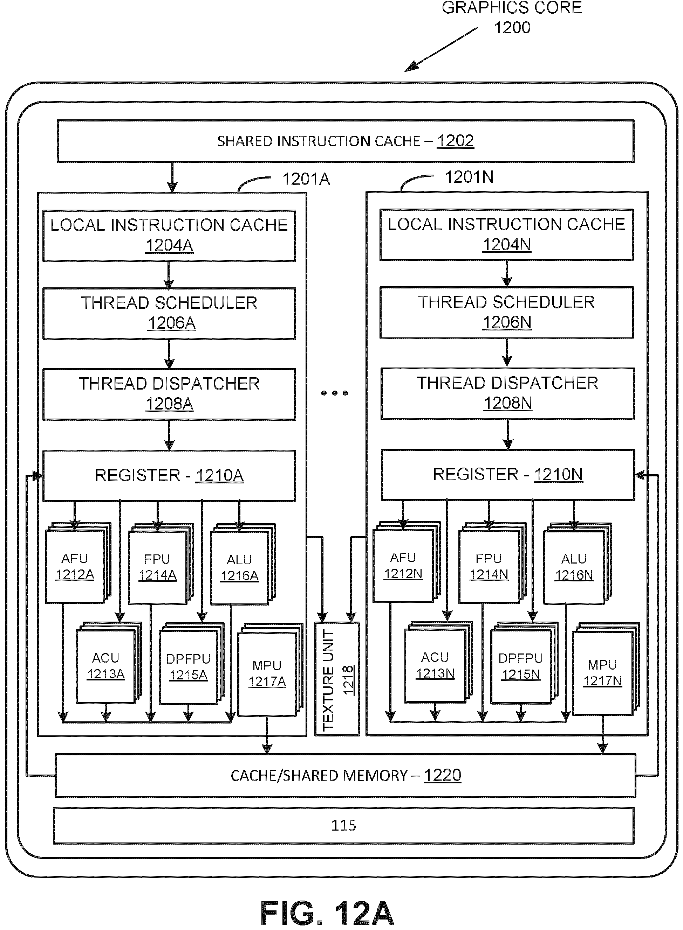

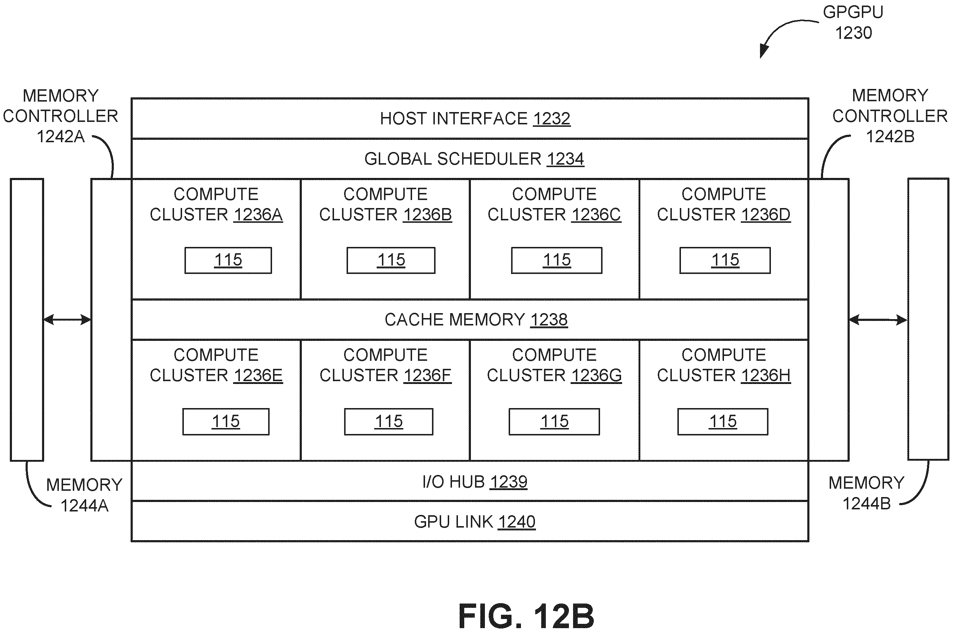

FIGS. 12A-12B illustrate additional exemplary graphics logic.

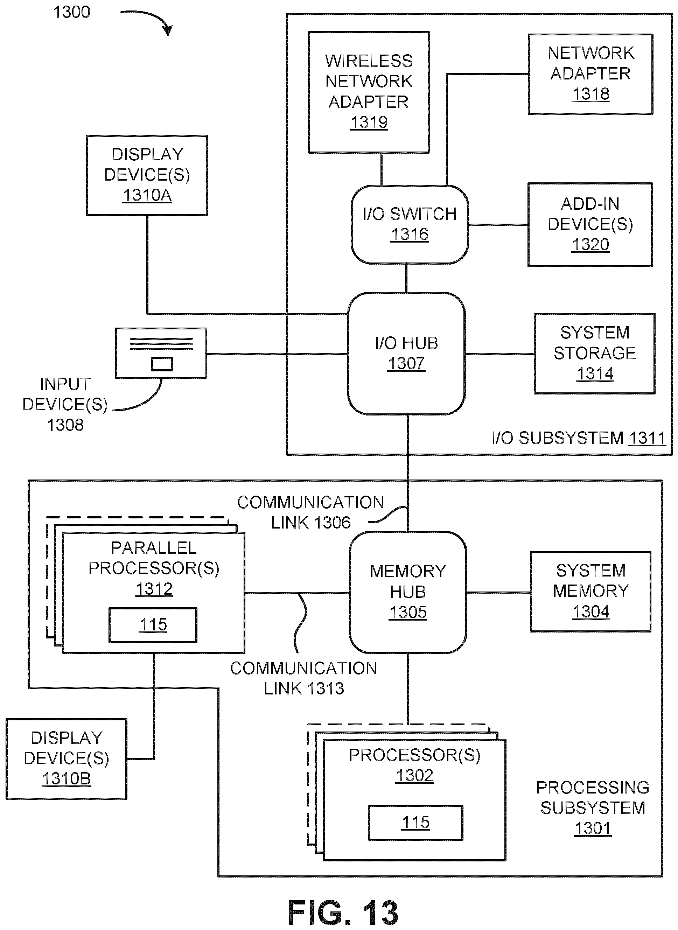

FIG. 13 illustrates a computer system.

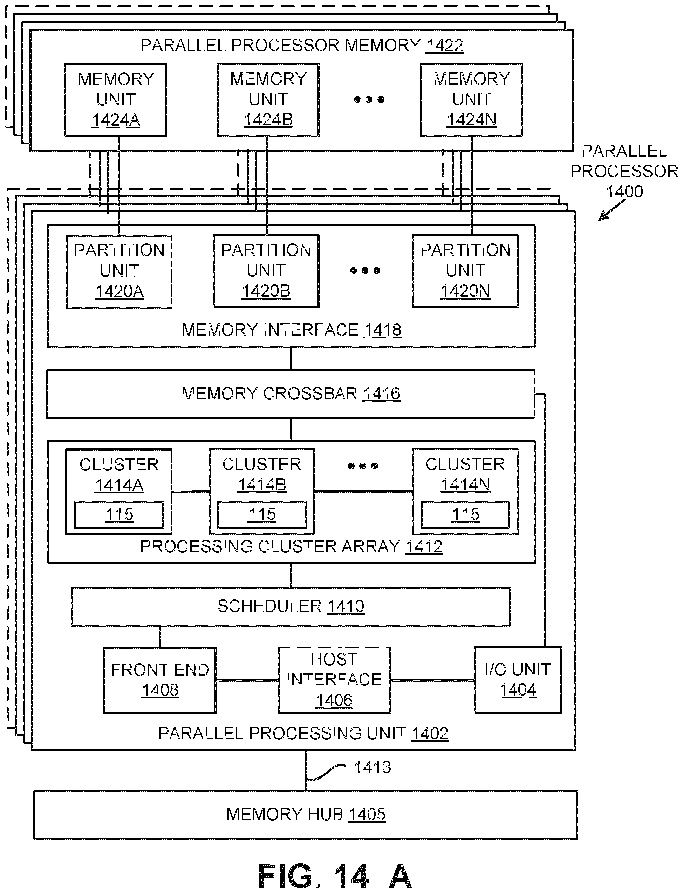

FIG. 14A illustrates a parallel processor.

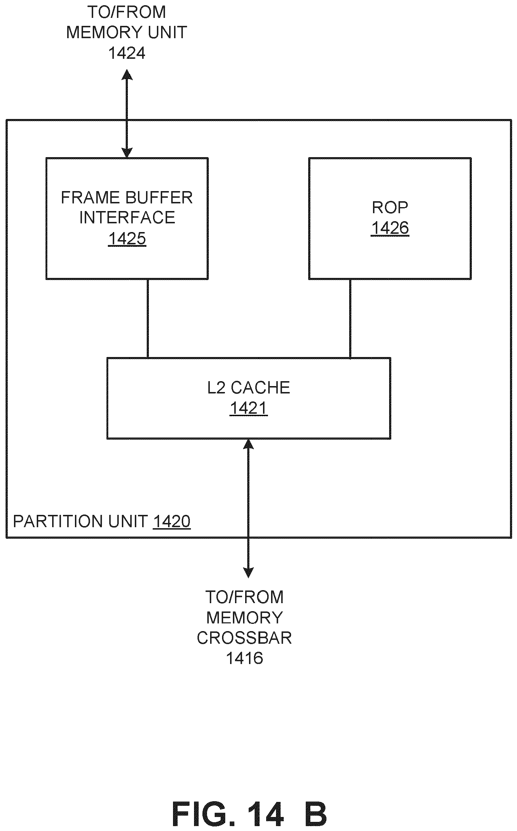

FIG. 14B illustrates a partition unit.

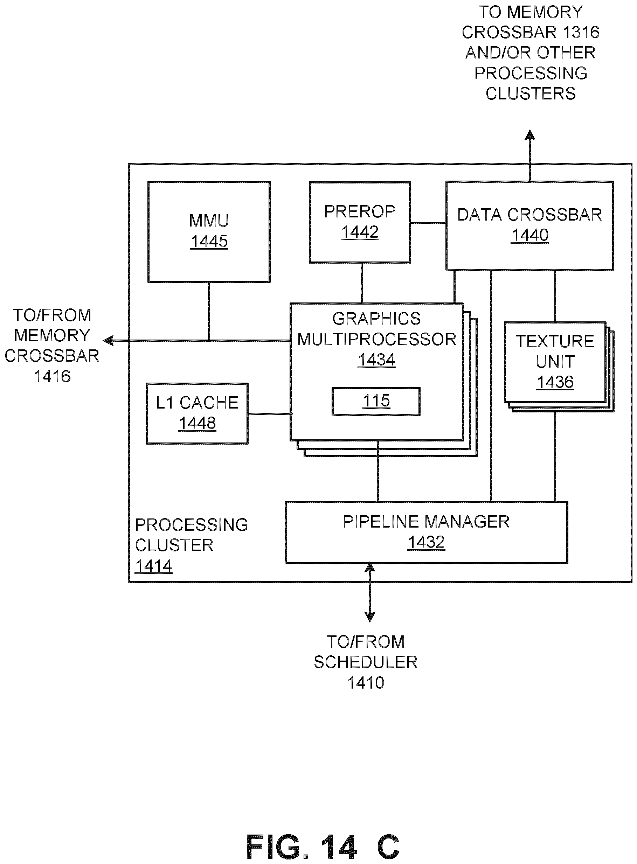

FIG. 14C illustrates a processing cluster.

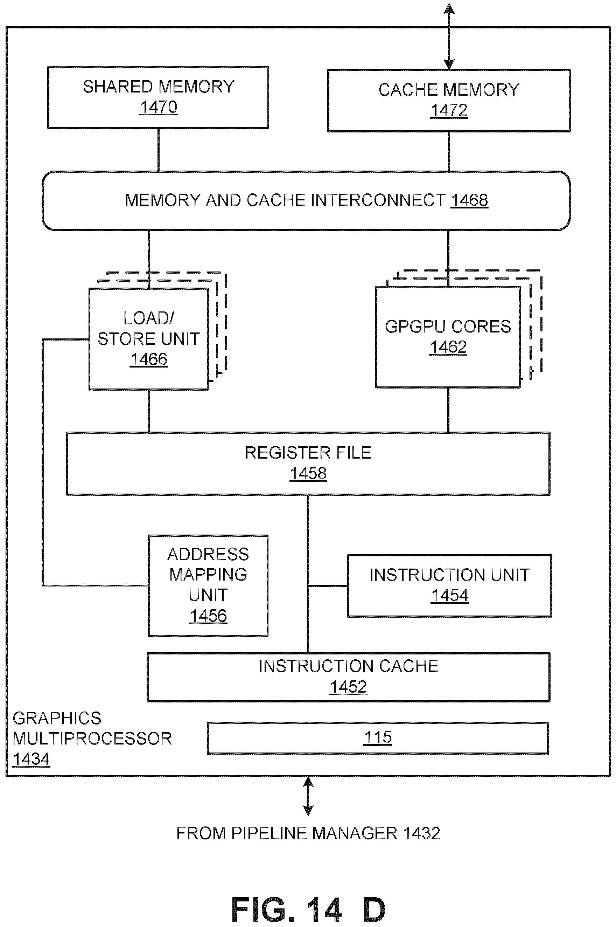

FIG. 14D illustrates a graphics multiprocessor.

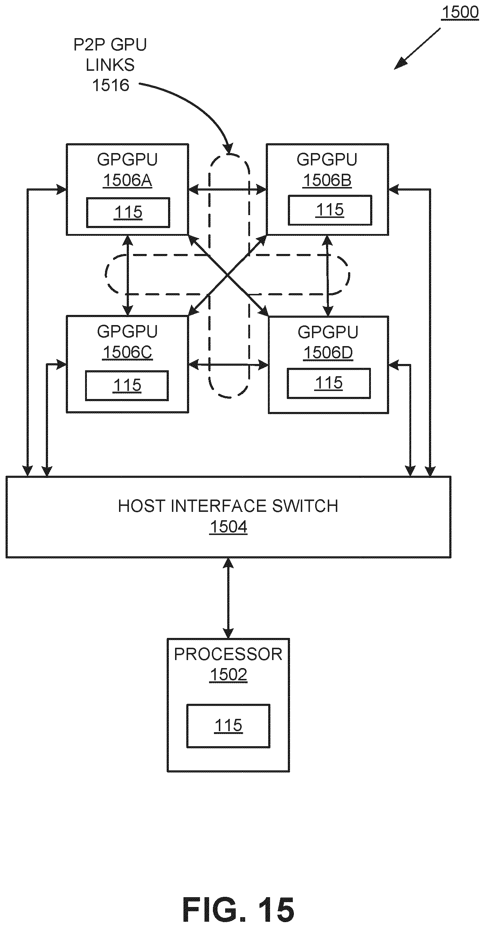

FIG. 15 illustrates a multi-graphics processing unit (GPU) system.

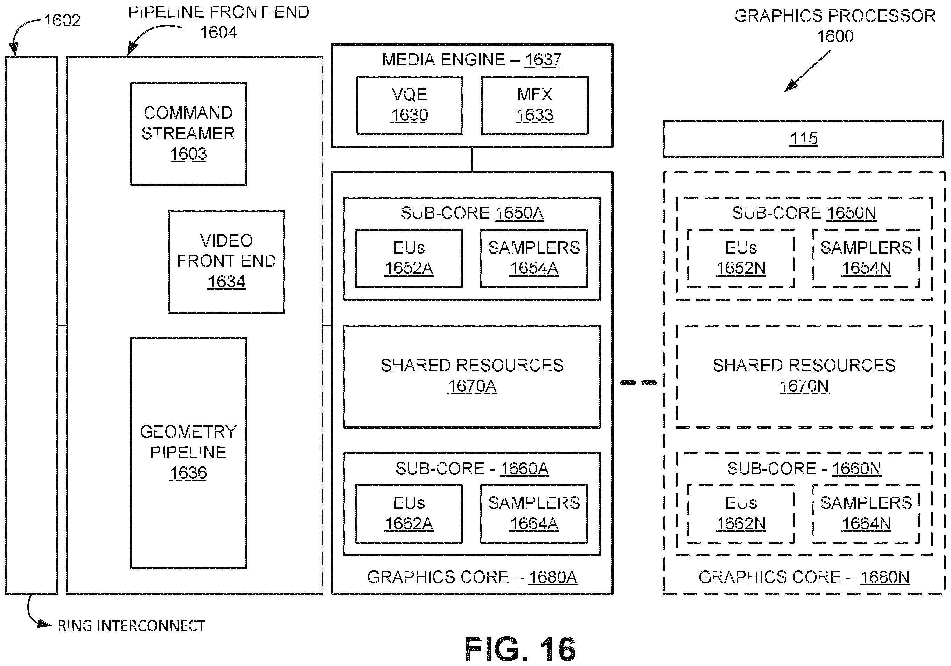

FIG. 16 illustrates a graphics processor.

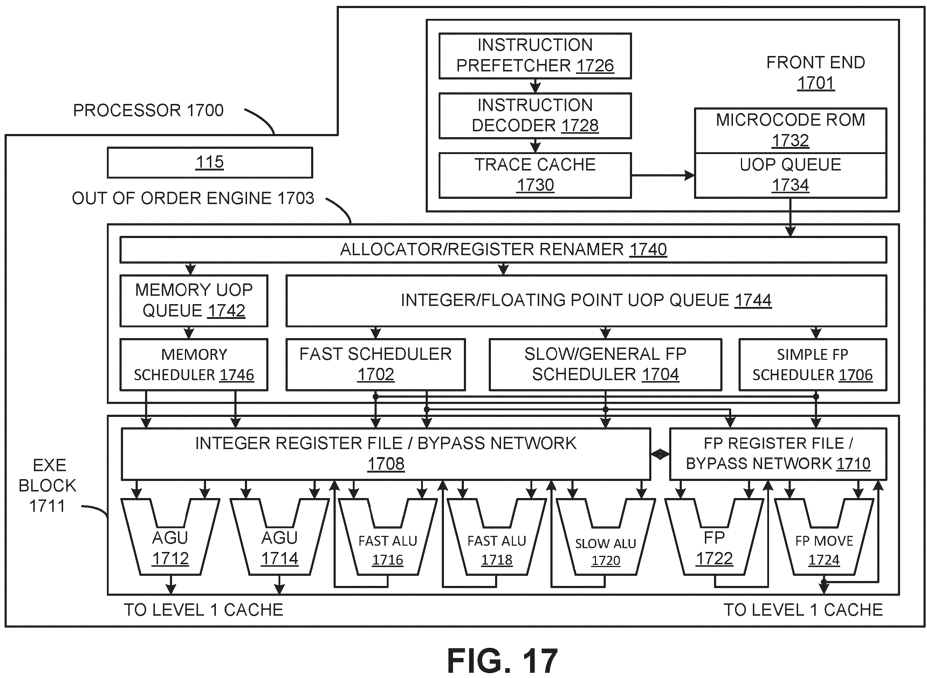

FIG. 17 is a block diagram illustrating a processor micro-architecture for a processor.

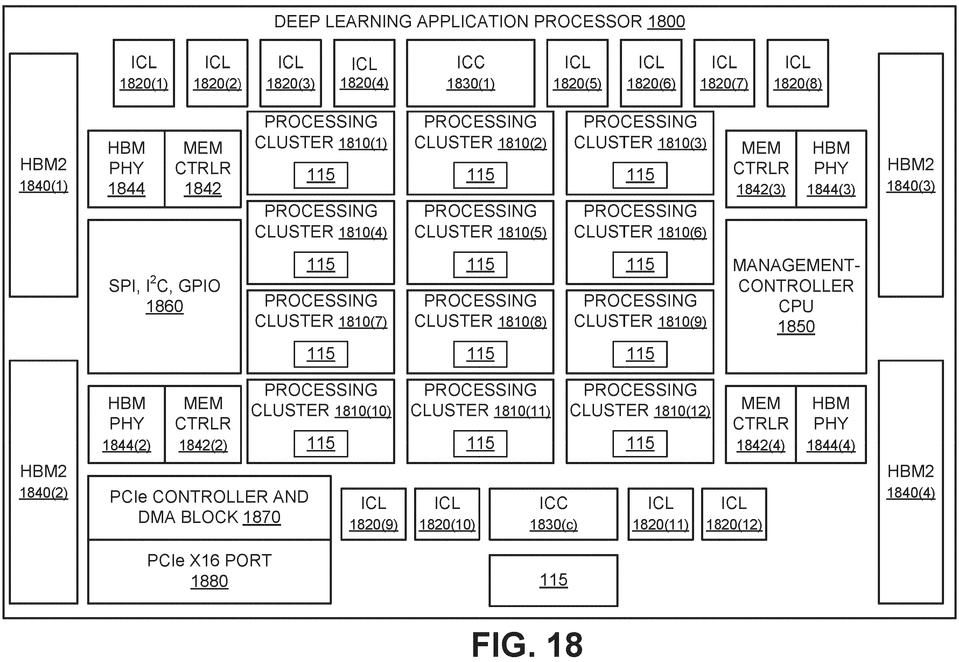

FIG. 18 illustrates a deep learning application processor.

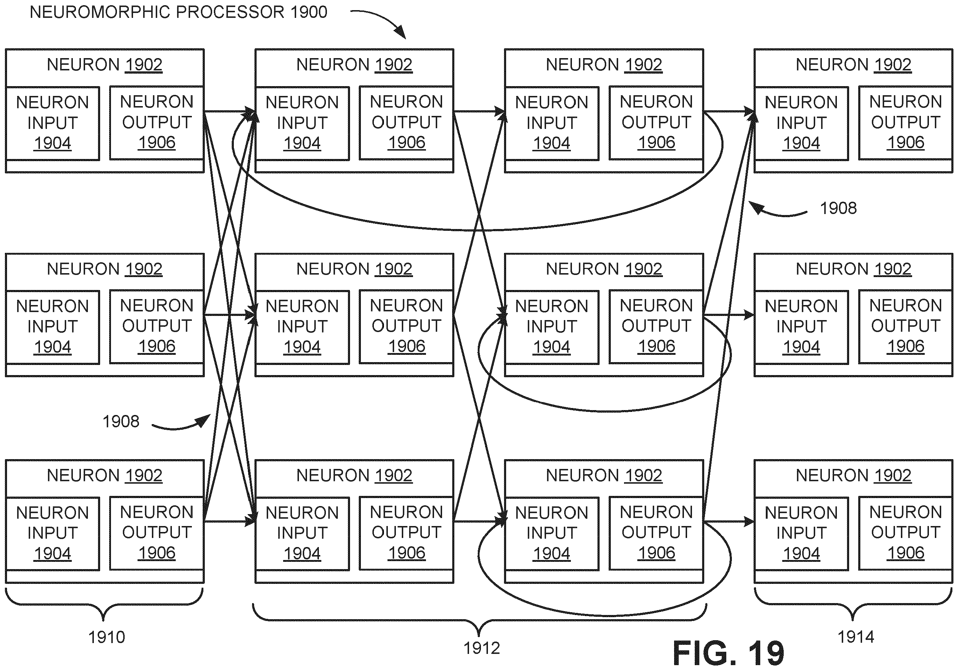

FIG. 19 is a block diagram illustrating an example neuromorphic processor.

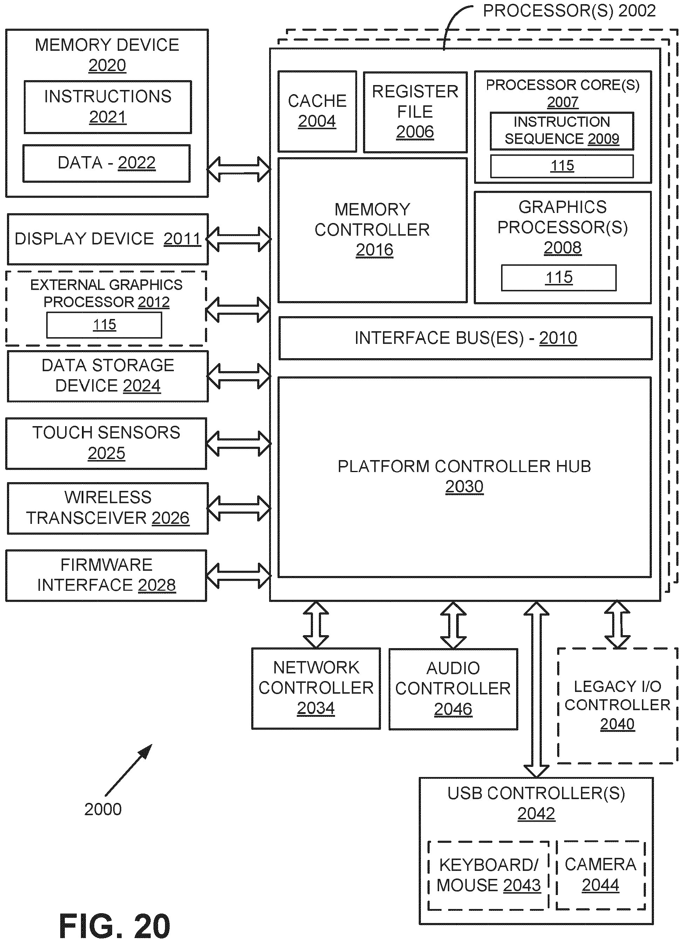

FIG. 20 illustrates at least portions of a graphics processor.

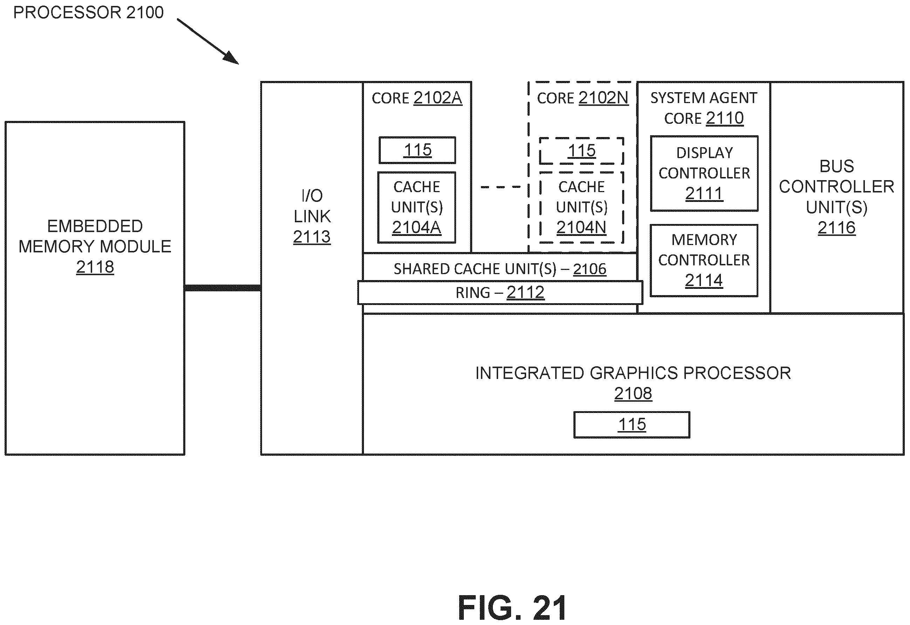

FIG. 21 illustrates at least portions of a graphics processor.

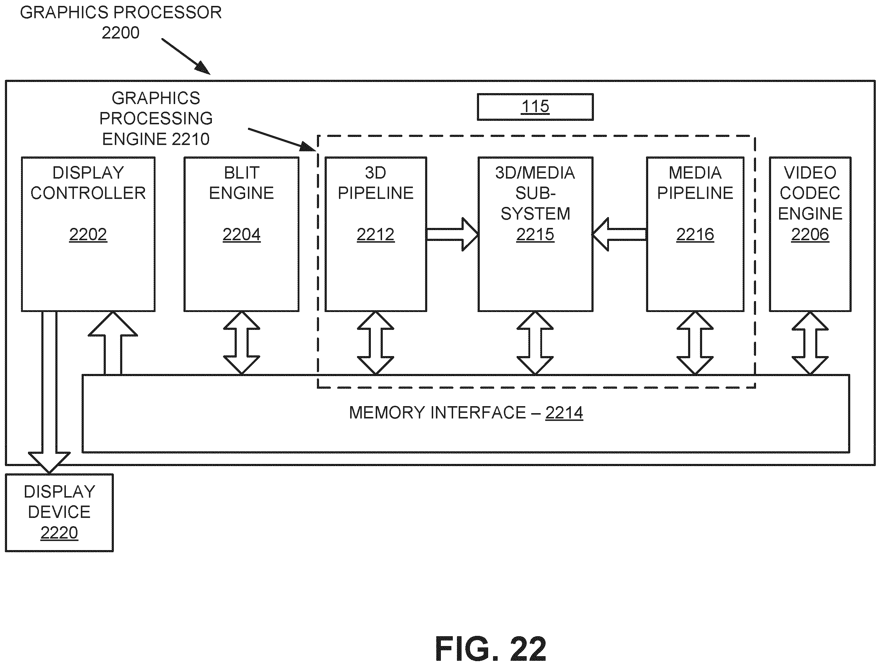

FIG. 22 illustrates at least portions of a graphics processor.

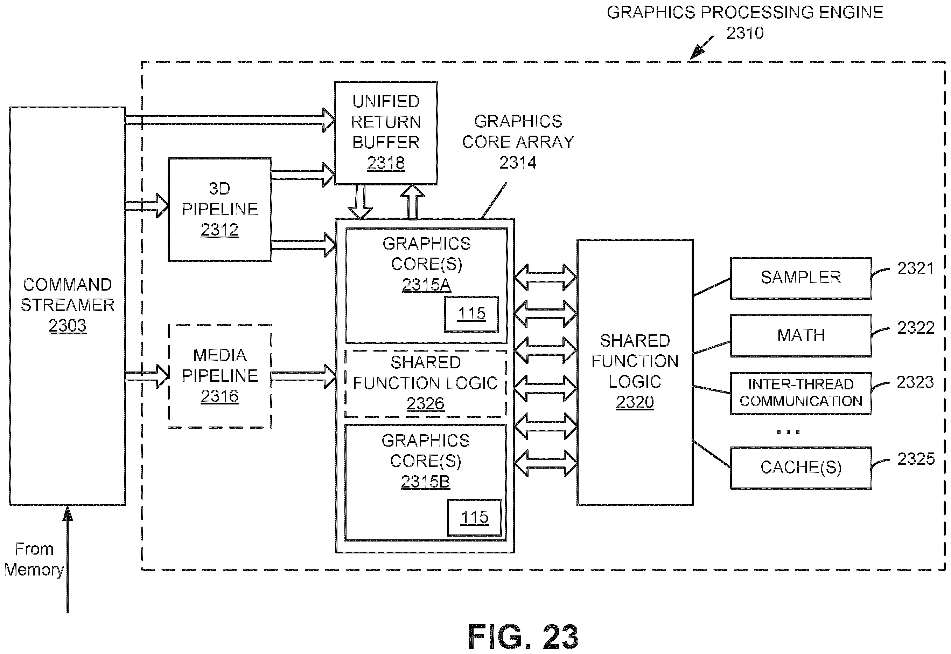

FIG. 23 is a block diagram of a graphics processing engine of a graphics processor.

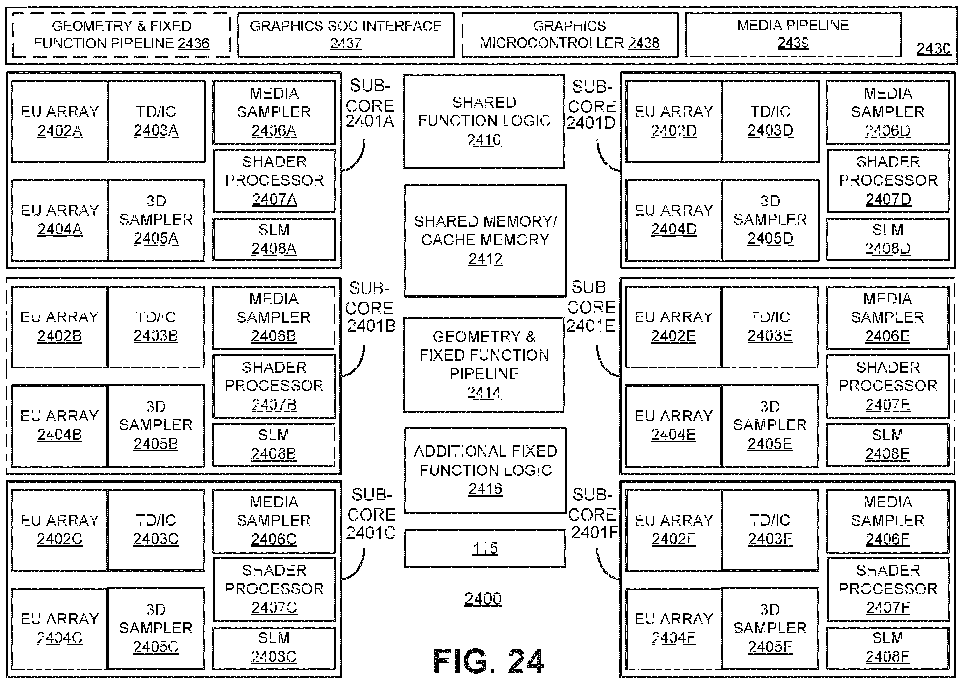

FIG. 24 is a block diagram of at least portions of a graphics processor core.

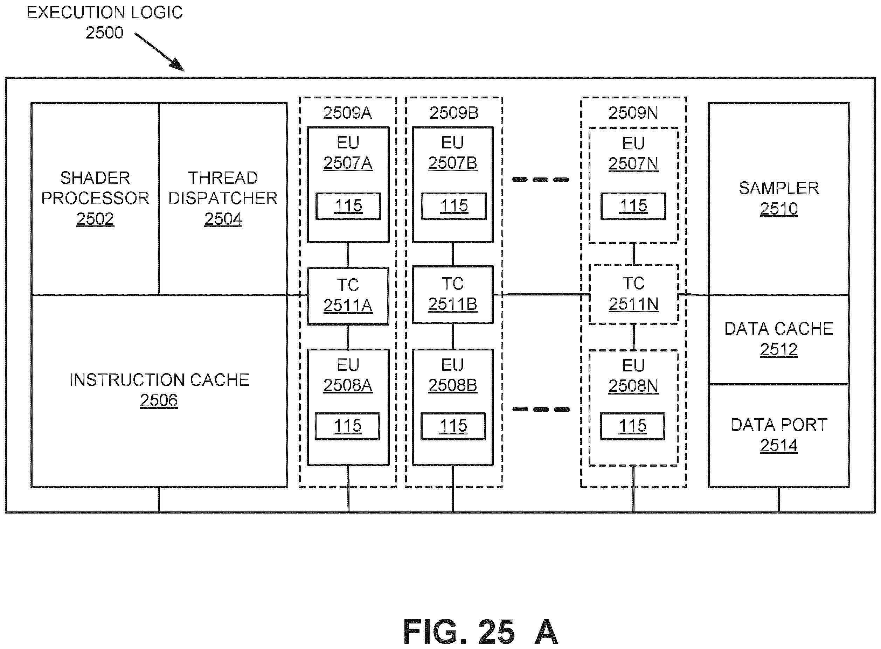

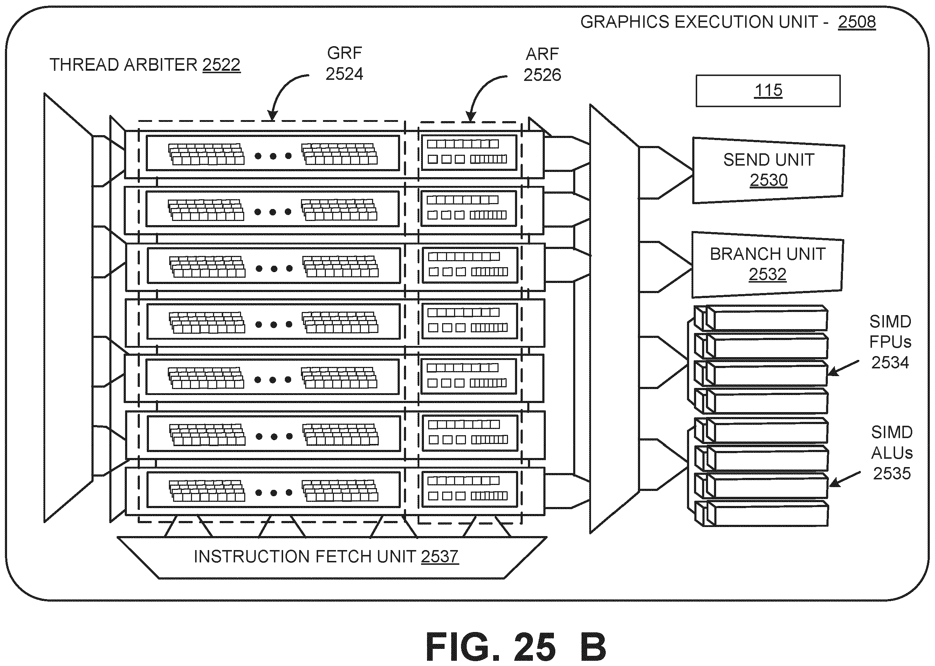

FIGS. 25A-25B illustrate thread execution logic including an array of processing elements of a graphics processor core.

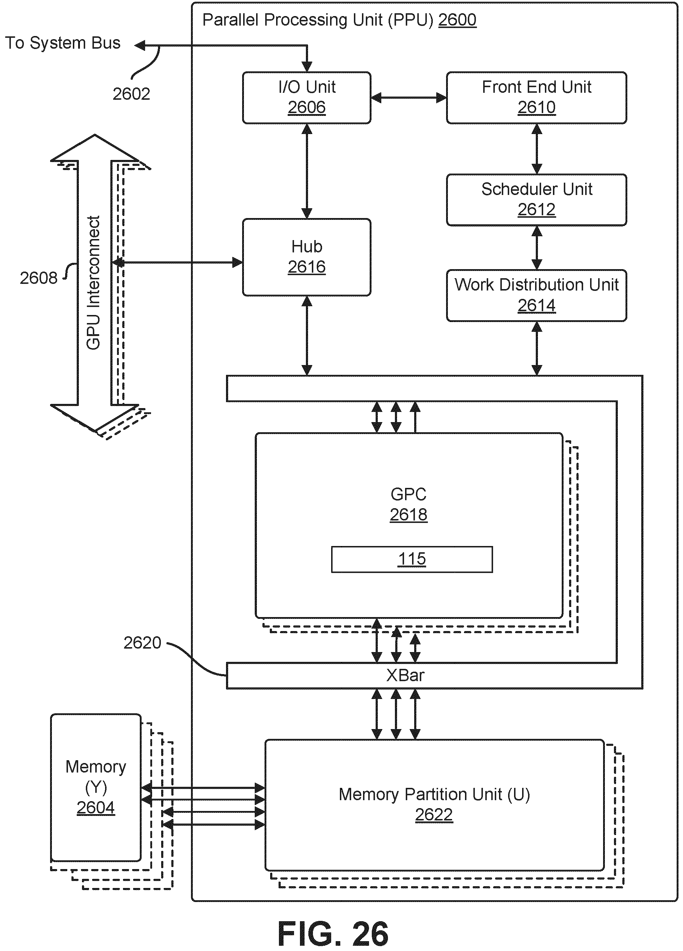

FIG. 26 illustrates a parallel processing unit ("PPU").

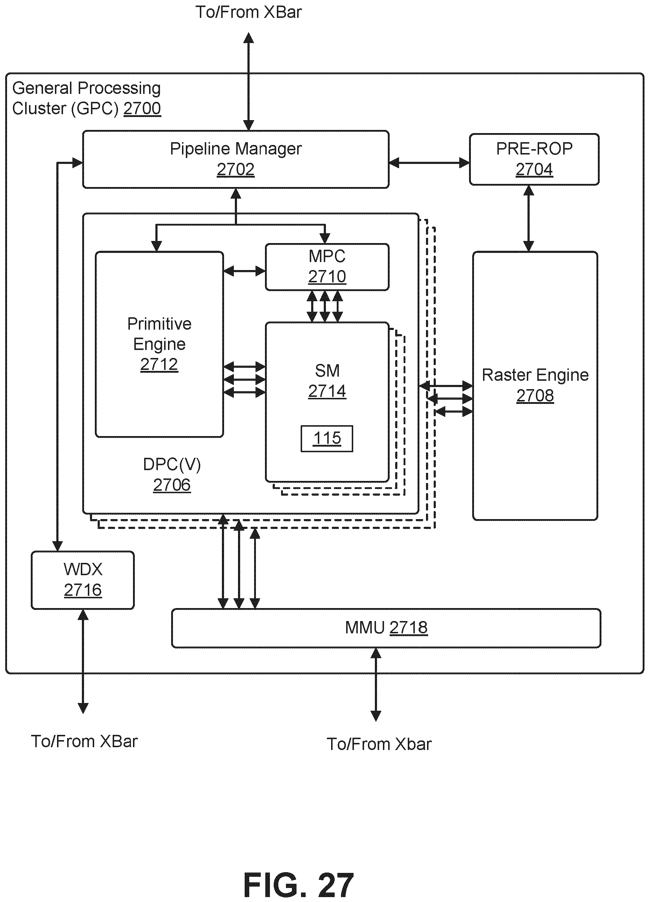

FIG. 27 illustrates a general processing cluster ("GPC").

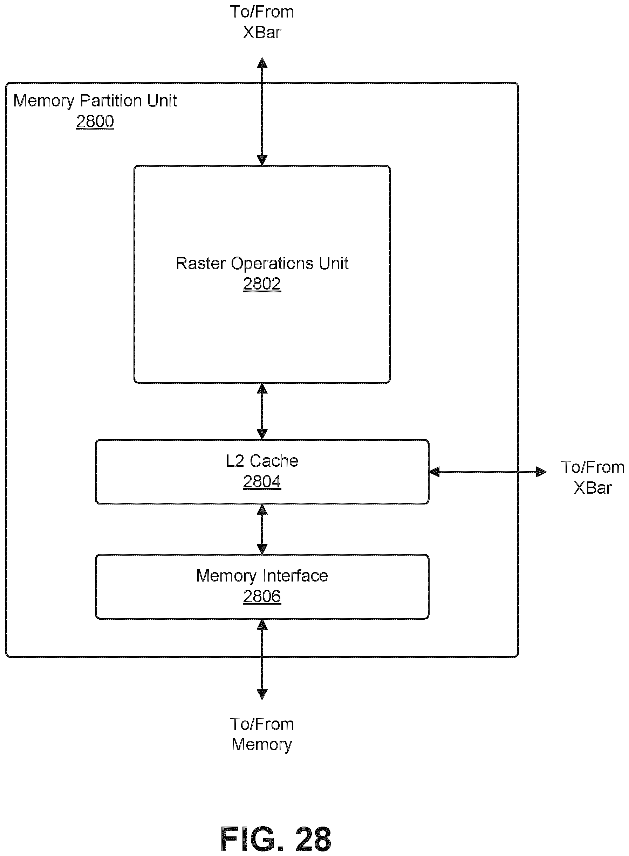

FIG. 28 illustrates a memory partition unit of a parallel processing unit ("PPU").

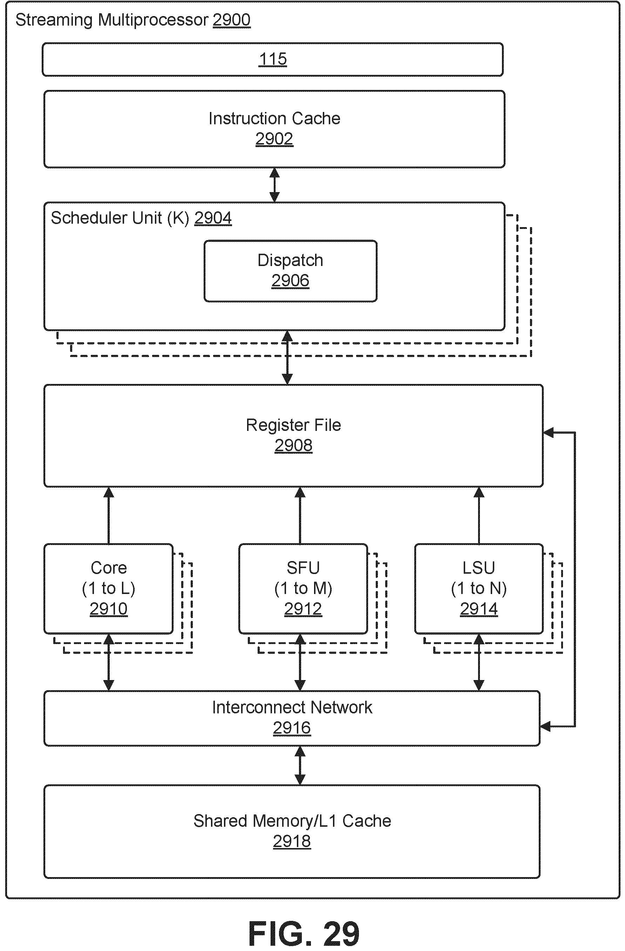

FIG. 29 illustrates a streaming multi-processor.

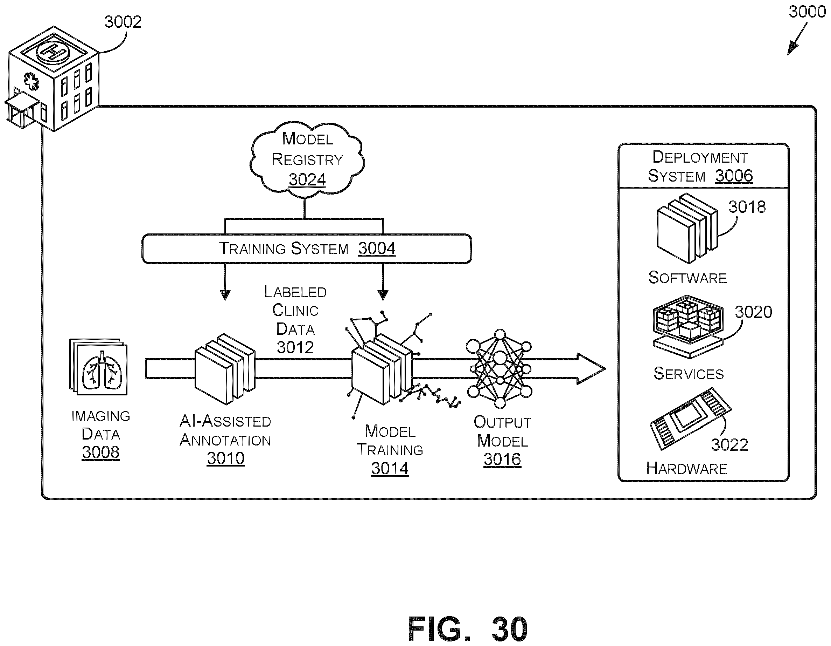

FIG. 30 is an example data flow diagram for an advanced computing pipeline.

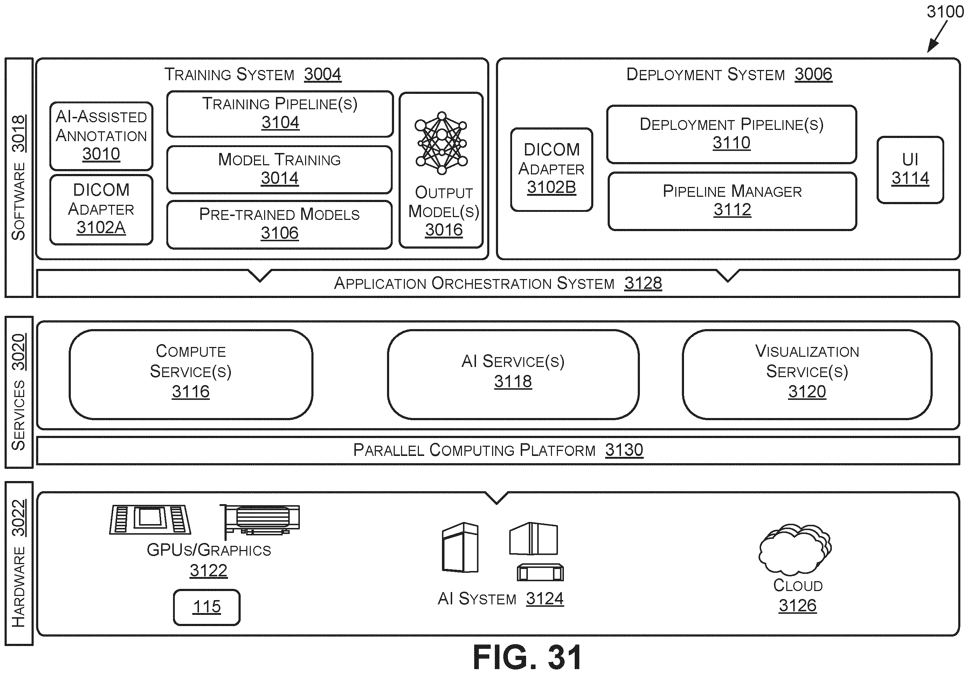

FIG. 31 is a system diagram for an example system for training, adapting, instantiating and deploying machine learning models in an advanced computing pipeline.

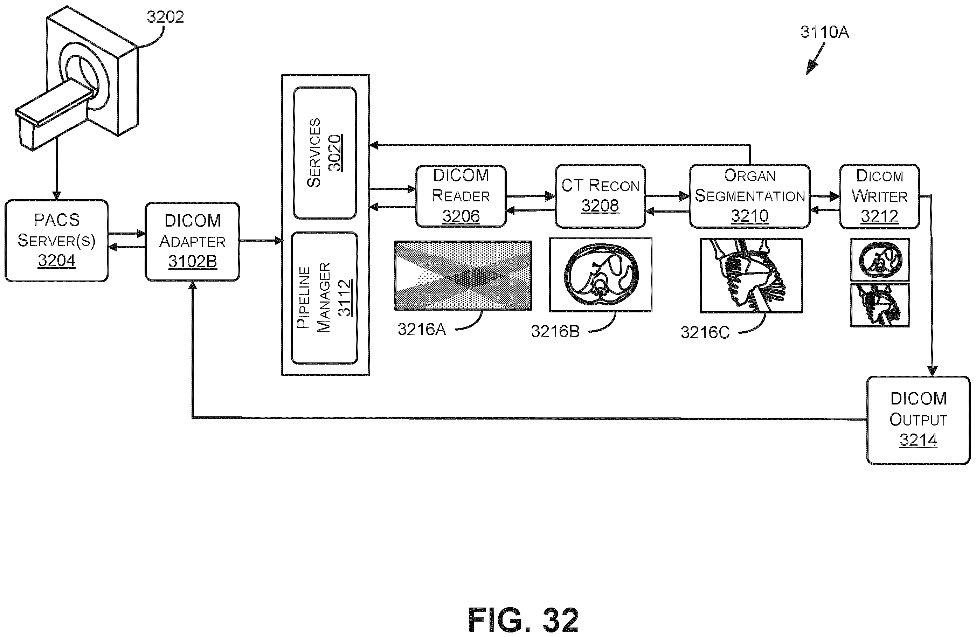

FIG. 32 includes an example illustration of an advanced computing pipeline for processing imaging data.

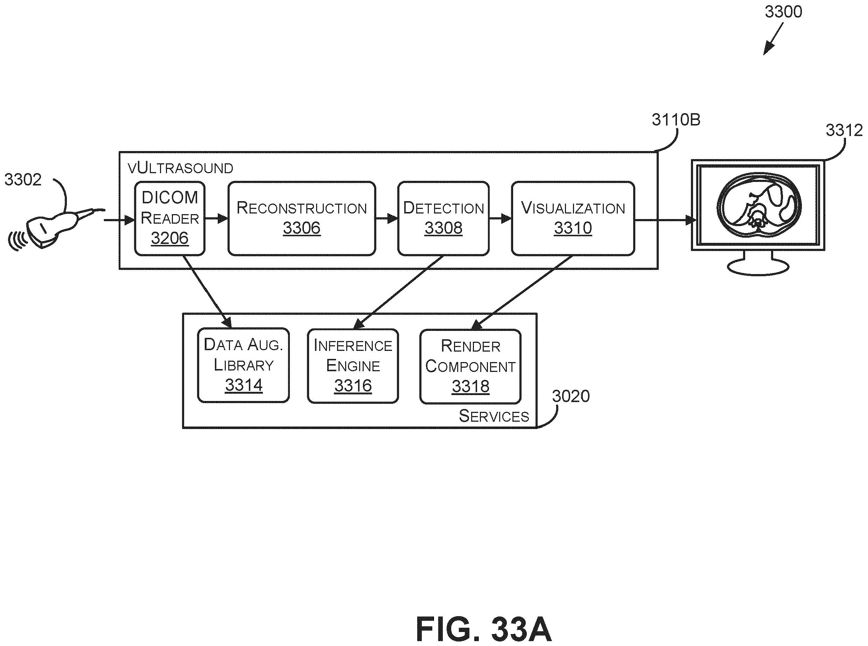

FIG. 33A includes an example data flow diagram of a virtual instrument supporting an ultrasound device.

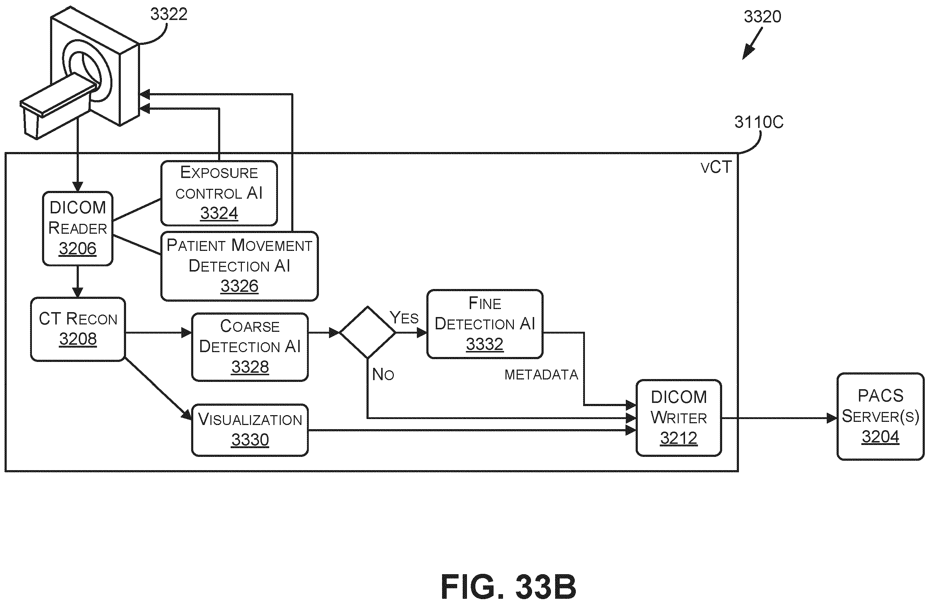

FIG. 33B includes an example data flow diagram of a virtual instrument supporting an CT scanner.

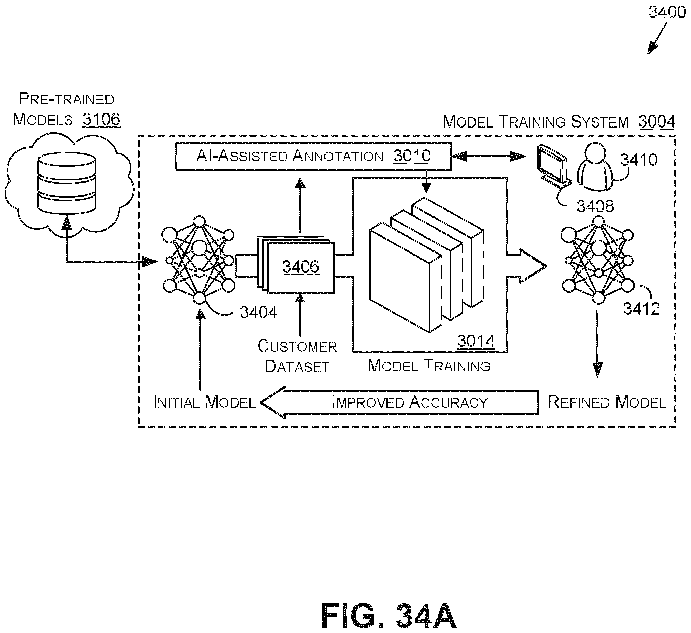

FIG. 34A illustrates a data flow diagram for a process to train a machine learning model.

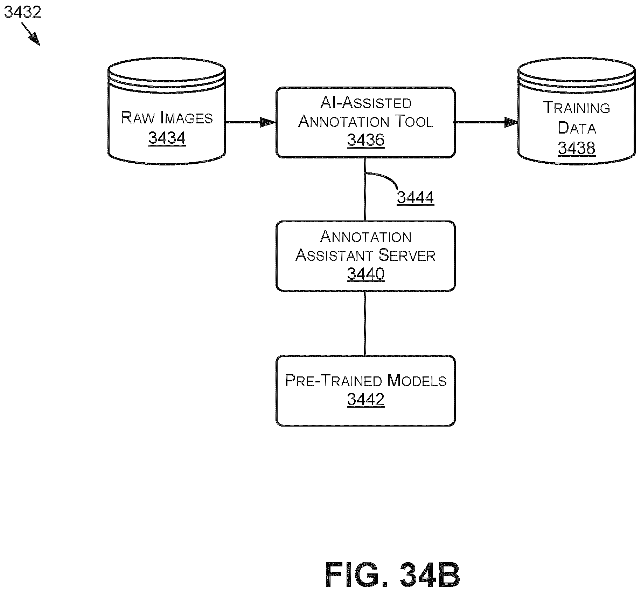

FIG. 34B is an example illustration of a client-server architecture to enhance annotation tools with pre-trained annotation models.
FIG. 35 illustrates a Data Processing Unit ("DPU") in accordance with at least one embodiment;
FIG. 36 illustrates at least one data structure used in accordance with at least one embodiment;

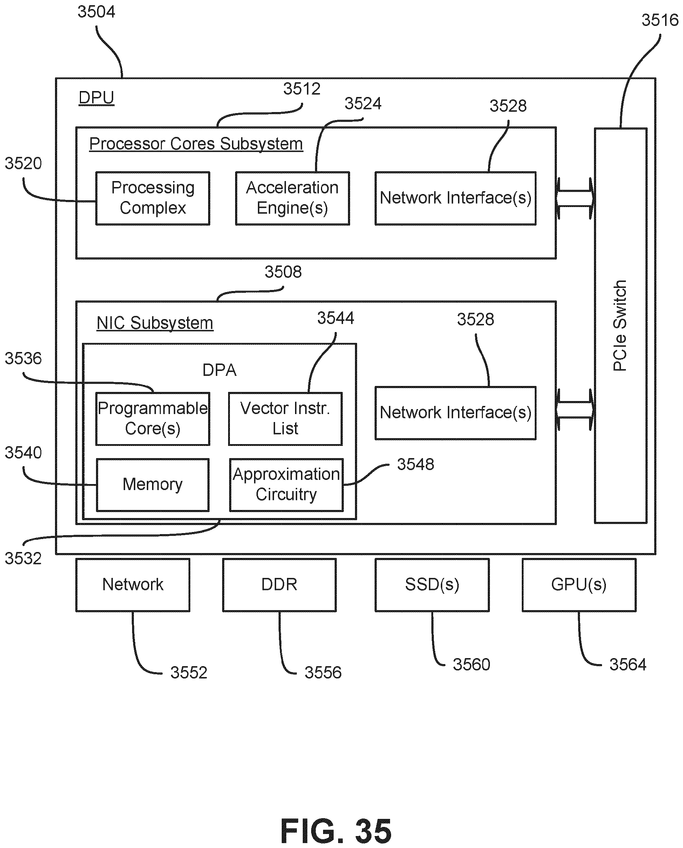

Referring now to FIG. 35, additional details of a DPU 3504 will be described in accordance with at least some embodiments. The DPU 3504 is shown to provide processing capabilities that include a Network Interface Controller (NIC) subsystem 3508 and a processor cores subsystem 3512. The NIC subsystem 3508 and processor cores subsystem 3512 are shown to be connectable through a PCIe switch 3516. While the DPU 3504 is shown to include a NIC subsystem 3508 and processor cores subsystem 3512, it should be appreciated that the DPU 3504 can provide other processor functions or types including, without limitation, CPU processors, GPU processors, and/or any other suitable type of processing architecture.

The processor cores subsystem 3512 may be configured to provide general processing capabilities and may include a processing complex 3520, one or more acceleration engines 3524, and one or more network interfaces 3528. The processing complex 3520 may include one or multiple processing cores (e.g., Advanced RISC Machine (ARM) processing cores, RISCV cores, CPU cores, GPU cores, etc.). As will be discussed in further detail herein, one or more processing cores of the processing complex 3520 may include programmable cores 3536 and/or approximation circuitry 3548 as shown in the NIC subsystem 3508; however, such components are not shown for ease of reference and discussion.

The acceleration engine(s) 3524 may provide hardware acceleration capabilities for the processors in the processing complex 3520 and/or for external GPU(s) 3564. As an example, a processing core in the processing complex 3520 may use one or more acceleration engines 3524 to perform a specific function whereas other undefined functions may be performed within the processing core of the processing complex 3520. The acceleration engine(s) 3524 can be appropriately configured to perform specified functions more quickly, with fewer computations, etc. as compared to other components of the processing complex 3520.

The network interface(s) 3528 may provide connectivity between components of the processor cores subsystem 3512 and other components external to the processor cores subsystem 3512. Illustratively, the network interface(s) 3528 may provide connectivity to the PCIe switch 3516 and/or one or more other external elements, such as an external network 3552, a DDR 3556, an SSD 3560, and/or a GPU 3564.

The network interface(s) 3528 may include physical, mechanical, optical, and/or electrical components that allow a remote device to communicate with the processing complex 3520 and/or acceleration engine(s) 3524 of the processor cores subsystem 3512. The network interface(s) 3528 may enable physical connections to a cable, wire, fiberoptic, etc. Alternatively or additionally, the network interface(s) 3528 may facilitate wireless communications, in which they may include one or more antennas, drivers, or the like.

The NIC subsystem 3508 is illustrated as another element of the DPU 3504. It should be appreciated that the components of the NIC subsystem 3508 and components of the processor cores subsystem 3512 may be in communication with one another via the PCIe switch 3516 or by some other communication mechanism. The NIC subsystem 3508 and processor cores subsystem 3512 may be provided on a common substrate, motherboard, or silicon. Alternatively, the NIC subsystem 3508 and processor cores subsystem 3512 may be provided on totally separate substrates, motherboards, or silicon.

As a non-limiting example, the NIC subsystem 3508 may provide functionality similar to a network adapter or other type of networking device. Illustrated components provided in the NIC subsystem 3508 include, without limitation, a Data Processing Accelerator (DPA) 3532 and one or more network interfaces 3528. The DPA 3532 may include one or more programmable cores 3536, memory 3540, a vector instruction list 3544, and approximation circuitry 3548. While illustrated as separate components, it should be appreciated that certain components of the DPA 3532 may be combined with one another. For instance, the vector instruction list 3544 and/or approximation circuitry 3548 may be included in the one or more programmable cores 3536. Alternatively or additionally, the memory 3540 may be provided external to the DAP 3532 or may be integrated as part of the programmable core(s) 3536.

The programmable core(s) 3536 may include one or more hardware and/or software components that are programmable and may support one or more functions of the DPU 3504. Examples of a suitable programmable core 3536 include, without limitation, a programmable logic core (PLC), a programmable logic array (PLA), etc. The programmable core(s) 3536 may be implemented in hardware and/or software on any type of medium. For instance, the programmable core(s) 3536 may be provided as a programmable SoC, a programmable ASIC, a programmable digital circuit, combinations thereof, or the like. The programmable core(s) 3536 may be similar or identical to other cores described herein, such as processing cores that were described as being included in the processing complex 3520.

The memory 3540 may correspond to any suitable type of memory device or collection of memory devices already described herein. Non-limiting examples of devices that may be provided as memory 3540 include RAM, ROM, flash memory, buffer memory, combinations thereof, and the like. In some embodiments, the memory 3540 may be cache line aligned.

The vector instruction list 3544 may include one or more instructions (e.g., vector instructions) that are capable of being performed in the programmable core(s) 3536. In some embodiments, the vector instruction list 3544 may provide a listing of functions that can be performed by the approximation circuitry 3548 or by other components (e.g., programmable core(s) 3536, the GPU(s) 3532, etc.). In some embodiments, functions (e.g., vector functions) that may be supported by the DPU 3504 and, thereby, made available in the vector instruction list 3544 include, without limitation, non-linear functions, linear functions, a hyperbolic tangent function (tanh(x)) function, a sigmoid function, a Rectified Linear Activation (ReLU) function, a softmax function, a softsign function, and an Exponential Linear Unit (ELU) function. Other suitable functions (whether activation functions or not) may also be listed in the vector instruction list. Non-limiting examples of such functions other than an activation function include a multiply add function, a vector accumulate function, a vector add function, a vector multiply function, a vector load function, and a vector store function. One or more of the instructions provided in the vector instruction list 3544 may be carried out completely in hardware (e.g., using the approximation circuitry 3548) and/or may utilize buffer(s) and/or a lookup table as will be described herein. In some embodiments, the approximation circuitry 3548 may be configured to compute approximations of functions listed in the vector instruction list 3544 and such approximations may be computed alone or with the assistance of additional components such as a buffer and/or a lookup table.

The network interface 3528 may be similar or identical to the network interface 3528 included in the processor cores subsystem 3512 and may include hardware and/or software components that enable operations of the NIC subsystem 3508 at the network layer. The network interface 3528 may also facilitate connectivity to the PCIe switch 3516. Examples of protocols that may be supported by the network interface 3528 include, without limitation, Ethernet, WiFi, Fibre Channel, Asynchronous Transfer Mode (ATM), Fiber Distributed Data Interface (FDDI), RDMA/TCP/UDP, ASAP², InfiniBand, etc.

The PCIe switch 3516 may include hardware and/or software that includes an expansion bus for a PCIe hierarchy on the DPU 3504. In some embodiments, the PCIe switch 3516 may include switching logic that routes packets between one or more ports of the PCIe switch 3516. The PCIe switch 3516 may include two or more different ports that are included as or that are connected to the network interface(s) 3528 of the NIC subsystem 3508 and processor cores subsystem 3512.

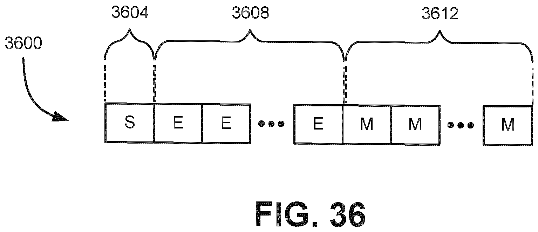

With reference now to FIG. 36, additional details of an illustrative instruction 3600 format will be described in accordance with at least some embodiments of the present disclosure. An instruction 3600 that can be processed within the DPU 3504 (or any other processor described herein) may include a sign bit (S) in a sign bit field 3604, one or more exponent bits (E) in an exponent bit field 3608, and one or more mantissa bits (M) in a mantissa bit field 3612. The instruction 3600 may be provided in any suitable instruction format. Non-limiting examples of instruction formats that may be used for the instruction 3600 include float32, float16, bfloat16, etc. As a more specific but non-limiting example, the instruction 3600 may include one sign bit field 3604, eight exponent bit fields 3608, and at least seven mantissa bit fields 3612. Alternatively or additionally, the instruction may include a greater or lesser number of exponent bit fields 3608 and/or a greater or lesser number of mantissa bit fields 3612.

The DPU 3504 and, specifically the approximation circuitry 3548, may be configured to receive input vectors in the form of or including the instruction 3600. Said another way, the DPU 3504 may be configured to operate on instructions 3600 and/or vectors having the format depicted in FIG. 36. Alternatively or additionally, the DPU 3504, the programmable core(s) 3536, and/or approximation circuitry 3548 may be configured to process a portion of an instruction 3600. In some embodiments, the instruction 3600 may be provided as a 16-bit vector (e.g., with a total of 16 bit fields).

The instruction 3600 can be provided as an operation code (Opcode), or any other suitable form or format. Illustratively, the instruction 3600 or input processed by the programmable core(s) 3536 and/or approximation circuitry 3548 may include a machine language instruction or portion of machine language instruction that specifies an operation to be performed by the circuitry. In some embodiments, the operation specified by the instruction includes a multiplication operation, vector activation function, non-linear function, etc.

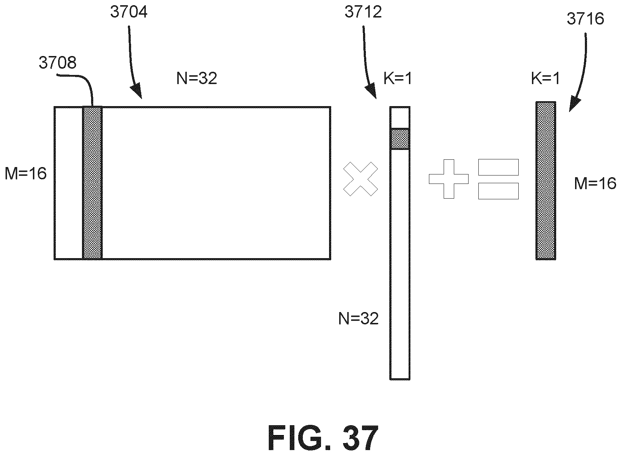

Referring now to FIG. 37, an example of a matrix multiplication approach that may be implemented by the programmable core(s) 3536 and/or approximation circuitry 3548 in connection with performing an activation function will be described. As discussed above, machine learning inference may sometimes involve multiplying a matrix with a vector. Sometimes, the matrix holds fixed weights while the vector content is variable. When using vector single instruction, multiple data (SIMD) instructions for matrix multiplication, there are a number of possible approaches that can be taken. One example of a matrix multiplication approach is depicted in FIG. 37, but it should be appreciated that other approaches are possible.

In the example of FIG. 37, a matrix 3704 is multiplied with vector 3712 to obtain a resultant vector 3716. The matrix 3704 is shown to be organized in memory by columns 3708, but it should be appreciated that the matrix 3704 can alternatively be organized by rows without departing from the scope of the present disclosure. The illustrative, but non-limiting, matrix 3704 of FIG. 37 is shown to include 16 rows and 32 columns, forming a 16 x 32 matrix 3704.

In this approach, the matrix 3704 is organized in memory by columns 3708. For each column 3708 the following process is followed. A scalar value is extracted from an input vector 3712. The extracted scalar value is vector multiplied with each of the elements in the corresponding/associated column 3708. For example, if the scalar value is extracted from the first element (e.g., the top-most element) of the input vector 3712, then the extracted scalar value is multiplied with each of the elements in the first column 3708 (e.g., the left-most column). If the scalar value is extracted from the second element (e.g., the second-top-most element) of the input vector 3712, then the extracted scalar value is multiplied with each of the elements in the second column 3708 (e.g., the second-left-most column).

The results of the vector multiplication described above (e.g., the multiplication of the extracted scalar value from the input vector 3712 with each element of the corresponding/associated column 3708) are then added together. In some embodiments, the results of the vector multiplication are added element-by-element to a vector accumulator. After each column 3708 has been multiplied by the elements of the input vector 3712, the output vector 3716 is constructed with each element of the output vector 3716 having the results of each element-by-element addition.

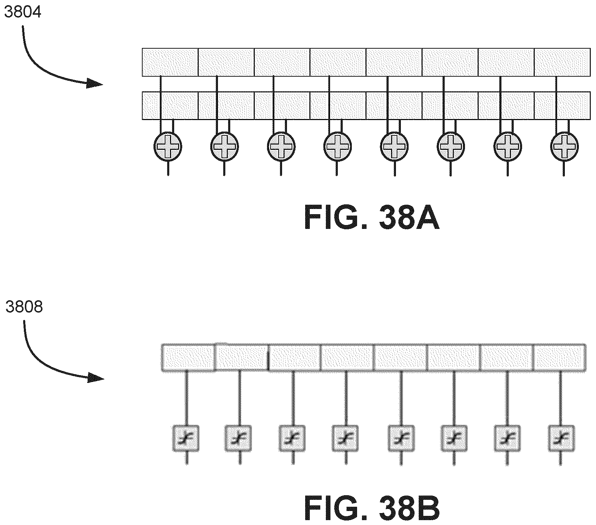

Referring now to FIGS. 38A and 38B, two illustrative configurations of circuitry 3804 and 3808 that may be used as part of the approximation circuitry 3548 will be described. The configuration of elements depicted and described in FIGS. 38A and 38B are intended to provide examples and should not be construed as limiting the claims to any particular configuration of circuit elements.

The circuitry 3804 of FIG. 38A is illustrated to include a number of adders. In some embodiments, the circuitry 3804 may facilitate a vector add instruction with a vector size of eight elements. FIG. 38B illustrates circuitry 3808 that may facilitate a vector tanh function with a vector size of eight elements. It should be appreciated that either circuitry 3804, 3808 may be adjusted to accommodate larger or smaller vectors. The illustrated types of circuitry 3804, 3808 may be configured to obtain 16 operations per clock cycle, meaning that each clock cycle will output 16 operations. Circuitry 3804, 3808 may be expanded to support more operations per clock cycle or contracted to support fewer operations per clock cycle. In some embodiments, the circuitry 3804, 3808 may be provided as part of the approximation circuitry 3548 to support performance of vector activation functions defined in the vector instruction list 3544. Because all operations can be performed on the data using the approximation circuitry 3548, it becomes possible to perform vector activation functions without requiring access to separate memory 3516, thereby increasing the speed of processing.

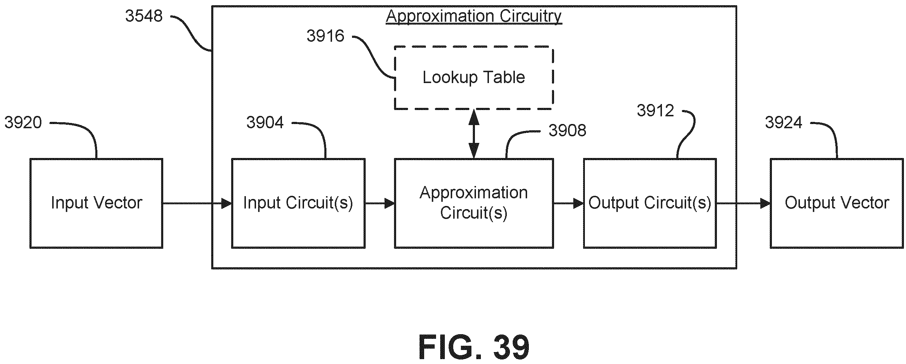

With reference now to FIG. 39, additional details of an illustrative approximation circuitry 3548 will be described in accordance with at least some embodiments of the present disclosure. Approximation circuitry 3548 is configured to include one or more input circuits 3904, one or more approximation circuits 3908, one or more output circuits 3912, and a lookup table 3916. While the components of the approximation circuitry 3548 are shown as being separate or distinct components, it should be appreciated that the input circuit(s) 3904, approximation circuit(s) 3908, and/or output circuit(s) 3912 may be combined into a single circuit or may be divided into more circuits than depicted.

Even though the lookup table 3916 is shown as being included in the approximation circuitry 3548, it should be appreciated that the lookup table 3916 may be outside and separate from the approximation circuitry 3548. The lookup table 3916 may provide information that supports vector aggregation. Alternatively or additionally, the lookup table 3916 may correspond to a hardware-based lookup table. The lookup table 3916 identifies particular circuits to use within the approximation circuitry 3548 when processing a particular instruction (e.g., when approximating a specific function). As an example, the lookup table 3916 may identify first circuitry to use when approximating a first activation function and the lookup table 3916 may identify second circuitry to use when approximating a second activation function.

In some embodiments, the approximation circuitry 3548 receives an input vector 3920 at the input circuit(s) 3904 and then provide the input vector to the approximation circuit(s) 3908. The approximation circuit(s) 3908 then applies an activation function to the input vector by performing a hardware approximation of the activation function in a vector manner. The output circuit(s) 3912 then generates an output vector 3924 based on the activation function.

The lookup table 3916 is referenced during the hardware approximation of the activation function. Moreover, the lookup table 3916 may be used to reference associated hardware to use during the approximation of the activation function (e.g., different hardware and/or circuitry may be used to perform the approximation of different activation functions). In some embodiments, the hardware approximation of the activation function may be performed in the absence of performing a memory 3516 lookup.

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

In a similar manner, term "processor" or "processing unit" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors or processing units. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

## Claims

1. A processing unit configured to execute instructions, comprising:
circuitry (3548) that, in response to an instruction, receives an input vector (3904), applies an activation function to the input vector by performing a hardware approximation of the activation function, and then generates an output vector (3924) based on the activation function; and
a lookup table (3916) that is referenced during the hardware approximation of the activation function, wherein the lookup table identifies particular circuits of the circuitry to use when processing a particular activation function.

2. The processing unit of claim 1, wherein the hardware approximation of the activation function is performed in an absence of performing a memory (3540) lookup.

3. The processing unit of any preceding claim, wherein the input vector is part of a matrix.

4. The processing unit of any preceding claim, wherein the activation function is made available on a vector instruction list (3544).

5. The processing unit of any preceding claim, wherein the activation function comprises a sigmoid function or a tanh(x) function.

6. The processing unit of any of claims 1 to 5, wherein the activation function comprises a non-linear function.

7. The processing unit of any preceding claim, wherein the input vector comprises N elements and wherein the circuitry performs the hardware approximation of the activation function for each of the N elements during a single clock cycle.

8. A system, comprising:
a processing unit configured to execute instructions, comprising:
circuitry (3548) that, in response to an instruction, receives an input vector (3904), applies an activation function to the input vector by performing a hardware approximation of the activation function, and then generates an output vector (3924) based on the activation function; and
a lookup table (3916) that is referenced during the hardware approximation of the activation function and wherein the lookup table identifies particular circuits of the circuitry to use when processing a particular activation function.

9. The system of claim 8, wherein the processing unit comprises a Central Processing Unit.

10. The system of claim 8, wherein the processing unit comprises a Graphics Processing Unit.

11. The system of claim 8, wherein the processing unit comprises a Data Processing Unit.

12. The system of any of claims 8 to 11, wherein the hardware approximation of the activation function is performed in an absence of performing a memory read or memory write.

13. A device comprising the processing unit of any of claims 1 to 7.

## Patentansprüche

1. Verarbeitungseinheit, die dafür konfiguriert ist, Anweisungen auszuführen, umfassend:
eine Schaltung (3548), die als Reaktion auf eine Anweisung einen Eingangsvektor (3904) empfängt, eine Aktivierungsfunktion auf den Eingangsvektor anwendet, indem sie eine Hardware-Approximation der Aktivierungsfunktion durchführt, und dann einen Ausgangsvektor (3924) basierend auf der Aktivierungsfunktion erzeugt; und
eine Nachschlagetabelle (3916), auf die während der Hardware-Approximation der Aktivierungsfunktion Bezug genommen wird, wobei die Nachschlagetabelle bestimmte Schaltkreise der Schaltung identifiziert, die bei der Verarbeitung einer bestimmten Aktivierungsfunktion zu verwenden sind.

2. Verarbeitungseinheit nach Anspruch 1, wobei die Hardware-Approximation der Aktivierungsfunktion ohne Durchführung eines Speicher- (3540) Nachschlags durchgeführt wird.

3. Verarbeitungseinheit nach einem der vorhergehenden Ansprüche, wobei der Eingangsvektor Teil einer Matrix ist.

4. Verarbeitungseinheit nach einem der vorhergehenden Ansprüche, wobei die Aktivierungsfunktion auf einer Vektor-Befehlsliste (3544) verfügbar gemacht wird.

5. Verarbeitungseinheit nach einem der vorhergehenden Ansprüche, wobei die Aktivierungsfunktion eine Sigmoid-Funktion oder eine tanh(x)-Funktion umfasst.

6. Verarbeitungseinheit eines der Ansprüche 1 bis 5, wobei die Aktivierungsfunktion eine nicht-lineare Funktion umfasst.

7. Verarbeitungseinheit nach einem der vorhergehenden Ansprüche, wobei der Eingangsvektor N Elemente umfasst und wobei die Schaltung die Hardware-Approximation der Aktivierungsfunktion für jedes der N Elemente während eines einzelnen Taktzyklus durchführt.

8. System, das Folgendes umfasst:
eine Verarbeitungseinheit, die dafür konfiguriert ist, Anweisungen auszuführen, umfassend:
eine Schaltung (3548), die als Reaktion auf eine Anweisung einen Eingangsvektor (3904) empfängt, eine Aktivierungsfunktion auf den Eingangsvektor anwendet, indem sie eine Hardware-Approximation der Aktivierungsfunktion durchführt, und dann einen Ausgangsvektor (3924) basierend auf der Aktivierungsfunktion erzeugt; und
eine Nachschlagetabelle (3916), auf die während der Hardware-Approximation der Aktivierungsfunktion Bezug genommen wird, und wobei die Nachschlagetabelle bestimmte Schaltkreise der Schaltung identifiziert, die bei der Verarbeitung einer bestimmten Aktivierungsfunktion zu verwenden sind.

9. System nach Anspruch 8, wobei die Verarbeitungseinheit eine Zentralverarbeitungseinheit umfasst.

10. System nach Anspruch 8, wobei die Verarbeitungseinheit eine Grafikverarbeitungseinheit umfasst.

11. System nach Anspruch 8, wobei die Verarbeitungseinheit eine Datenverarbeitungseinheit umfasst.

12. System nach einem der Ansprüche 8 bis 11, wobei die Hardware-Approximation der Aktivierungsfunktion durchgeführt wird, ohne dass ein Speicherlese- oder Speicherschreibvorgang durchgeführt wird.

13. Vorrichtung, die die Verarbeitungseinheit nach einem der Ansprüche 1 bis 7 umfasst.

## Revendications

1. Unité de traitement configurée pour exécuter des instructions, comprenant :
une circuiterie (3548) qui, en réponse à une instruction, reçoit un vecteur d'entrée (3904), applique une fonction d'activation au vecteur d'entrée en réalisant une approximation matérielle de la fonction d'activation, et puis génère un vecteur de sortie (3924) sur la base de la fonction d'activation ; et
une table de correspondance (3916) qui est référencée pendant l'approximation matérielle de la fonction d'activation, dans laquelle la table de correspondance identifie des circuits particuliers de la circuiterie à utiliser quand une fonction d'activation particulière est traitée.

2. Unité de traitement selon la revendication 1, dans laquelle l'approximation matérielle de la fonction d'activation est réalisée en l'absence de réalisation d'une consultation de mémoire (3540).

3. Unité de traitement selon l'une quelconque des revendications précédentes, dans laquelle le vecteur d'entrée fait partie d'une matrice.

4. Unité de traitement selon l'une quelconque des revendications précédentes, dans laquelle la fonction d'activation est rendue disponible sur une liste d'instructions de vecteur (3544).

5. Unité de traitement selon l'une quelconque des revendications précédentes, dans laquelle la fonction d'activation comprend une fonction sigmoïde ou une fonction tanh(x).

6. Unité de traitement selon l'une quelconque des revendications 1 à 5, dans laquelle la fonction d'activation comprend une fonction non linéaire.

7. Unité de traitement selon l'une quelconque des revendications précédentes, dans laquelle le vecteur d'entrée comprend N éléments et dans laquelle la circuiterie réalise l'approximation matérielle de la fonction d'activation pour chacun des N éléments pendant un cycle d'horloge unique.

8. Système, comprenant :
une unité de traitement configurée pour exécuter des instructions, comprenant :
une circuiterie (3548) qui, en réponse à une instruction, reçoit un vecteur d'entrée (3904), applique une fonction d'activation au vecteur d'entrée en réalisant une approximation matérielle de la fonction d'activation, et puis génère un vecteur de sortie (3924) sur la base de la fonction d'activation ; et
une table de correspondance (3916) qui est référencée pendant l'approximation matérielle de la fonction d'activation et dans lequel la table de correspondance identifie des circuits particuliers de la circuiterie à utiliser quand une fonction d'activation particulière est traitée.

9. Système selon la revendication 8, dans lequel l'unité de traitement comprend une Unité centrale de traitement.

10. Système selon la revendication 8, dans lequel l'unité de traitement comprend une Unité de traitement graphique.

11. Système selon la revendication 8, dans lequel l'unité de traitement comprend une Unité de traitement de données.

12. Système selon l'une quelconque des revendications 8 à 11, dans lequel l'approximation matérielle de la fonction d'activation est réalisée en l'absence de la réalisation d'une lecture de mémoire ou d'une écriture de mémoire.

13. Dispositif comprenant l'unité de traitement selon l'une quelconque des revendications 1 à 7.
